# EUROPEAN PATENT APPLICATION

(11) **EP 1 640 392 A1**
(43) Date of publication of application: **29.03.2006**
(21) Application number: 04746435.9
(22) Date of filing: 18.06.2004
(51) Int. Cl.: C08F 299/00

(54) **CURING COMPOSITION HAVING MOLD RELEASABILITY**

(30) Priority: 27.06.2003 JP 2003185548
(71) Applicant: KANEKA CORPORATION, Osaka-shi, Osaka 530-8288 (JP)
(72) Inventor: OKADA, Kenji, Kobe-shi, Hyogo 657-0036 (JP); KOTANI, Jun, Kaneka Corporation, Settsu-shi, Osaka 566-0072 (JP); NAKAGAWA, Yoshiki, Kaneka Corporation, Settsu-shi, Osaka 566-0072 (JP)
(74) Representative: Hart Davis, Jason
(86) International application number: PCT/JP2004/008966
(87) International publication number: WO 2005/000928

(57) **Abstract**

The present invention provides a curable composition comprising:
(A) a vinyl polymer (I) comprising, at the molecular terminus, at least one group represented by the general formula (1):

   CH₂=C(R^{a})-C(O)O- (1)

   wherein R^{a} represents a hydrogen atom or a monovalent organic group having 1 to 20 carbon atoms,
(B) a polymerization initiator, and
(C) a metallic soap. The curable composition comprising a vinyl polymer has superior mold release properties without a substantial decrease in mechanical properties such as compression set.

## Description

### Technical Field

The present invention relates to a curable composition. In particular, the present invention relates to a curable composition for molding with mold release properties, comprising a vinyl polymer having as essential components a (meth)acryloyl group, a polymerization initiator, and a metallic soap.

### Background Art

A molded product comprising a vinyl polymer or a (meth) acrylic polymer as main components is obtained by mixing together under heat, using for example a roller or a mill, a polymer with high molecular weight and various additives, followed by molding. When molding a thermoplastic or thermosetting resin, it is necessary to carry out the molding in a heat-melted state. Accordingly, there exists a problem that additives vulnerable to heat cannot be used. Further, when molding rubber, typically acrylic rubber, it can be obtained by mixing unvulcanized rubber with a compounding ingredient such as a filler and a vulcanizer, followed by vulcanized molding. In such a case, in addition to the above problem, other problems are seen such as poor processability and slow vulcanizing rate, for example adherence to the roller uponmixing, difficulty of obtaining smoothness upon sheeting, and being non-liquid upon molding, or poor curing property, for example the necessity for long post-curing time. In order to solve these problems, curable compositions of vinyl polymer are disclosed (Patent Document 1, Patent Document 2) . However, cured products obtained from these curable compositions may not be sufficient in the mold release properties, resulting in fracture of cured product upon removal of the molded product created, thereby leading to so-called rubber rupture. In some cases the rubber (cured product) could not be detached from the mold. It is also a known technology to add calcium stearate as a mold release agent (Patent Document 3), although no technology related to acrylic polymer exists, and a formulation of a mold release agent and a resin that does not reduce for example compression set is not known.
[Patent Document 1] Japanese Patent Laid-Open No. 9-272714
[Patent Document 2] Japanese Patent Laid-Open No. 2000-154255
[Patent Document 3] Japanese Patent Laid-Open No. 2000-160026

### Disclosure of the Invention

The object of the present invention is to provide a curable composition comprising a vinyl polymer which gives a cured product having generally good mechanical property, oil resistance, heat resistance, and weather resistance etc. The cured product is imparted superiority in mold release properties without virtually reducing mechanical properties such as compression set.

As a result of intensive studies to solve the above problems, the present inventors found that by adding a metallic soap to a curing system that may be cured by polymerization reaction of a (meth) acryloyl group-containing vinyl polymer, a curable composition can be obtained wherein the curedproduct is imparted superiority in mold release properties without virtually reduced mechanical properties such as compression set, and thereby completed the present invention.

More specifically, the present invention relates to a curable composition comprising:
(A) a vinyl polymer (I) comprising, at the molecular terminus, at least one group represented by the general formula (1):

   CH₂=C(R^{a})-C(O)O- (1)

   wherein R^{a} represents a hydrogen atom or a monovalent organic group having 1 to 20 carbon atoms;
(B) a polymerization initiator; and
(C) a metallic soap.

The present invention also relates to a method for improving mold release properties of a curedproduct obtainable from a curable composition comprising (A) a vinyl polymer having, at the molecular terminus, at least one group represented by the general formula (1):

CH₂=C (R^{a})-C(O)O- (1)

wherein R^{a} represents a hydrogen atom or a monovalent organic group having 1 to 20 carbon atoms, and (B) a polymerization initiator, the method comprising incorporating (C) a metallic soap into the curable composition.

The present invention further relates to a cured product obtained from the curable composition.

The present invention can provide a curable composition for molding which is superior in mold release properties without substantial loss of mechanical properties such as compression set, by using as essential components a (meth)acryloyl group-containing vinyl polymer, a polymerization initiator and a metallic soap. The vinyl polymer is preferably produced by living radical polymerization, more preferably by atom transfer radical polymerization. This allows for precise control of molecular weight and functionalization rate, thereby enabling appropriate controlling of physical properties.

### Best Mode for Carrying Out the Invention

The curable composition of the invention will now be described in detail.

### <<Vinyl polymer (I)>>

### <Main chain>

The vinyl monomer constituting the main chain of the vinyl polymer (I) of the present invention is not particularly limited, and various monomers can be used. Examples of a monomer include a (meth) acrylic monomer such as (meth) acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth) acrylate, nonyl (meth) acrylate, decyl (meth) acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl) trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth) acrylate; an aromatic vinyl monomer such as styrene, vinyl toluene, α-methylstyrene, chlorstyrene, styrene sulfonate and a salt thereof; a fluorine-containing vinyl monomer such as perfluoroethylene, perfluoropropylene, and vinylidene fluoride; a silicon-containing vinyl monomer such as vinyltrimethoxysilane and vinyltriethoxysilane; maleic anhydride, maleic acid, and monoalkyl and dialkyl esters of maleic acid; fumaric acid, monoalkyl and dialkyl esters of fumaric acid; a maleimide monomer such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; an acrylonitrile monomer such as acrylonitrile and methacrylonitrile; an amide group-containing vinyl monomer such as acrylamide and methacrylamide; a vinyl ester such as vinyl acetate, vinyl propionate, vinyl pivalate, vinyl benzoate, and vinyl cinnamate; an alkene such as ethylene and propylene; a conjugateddiene such as butadiene and isoprene; vinyl chloride, vinylidene chloride and allyl chloride and allyl alcohol. These may be used alone, or two or more may be copolymerized.

It is preferred that the vinyl polymer (I) has a main chain produced by polymerization using as the main component at least one monomer selected from the group consisting of a (meth) acrylic monomer, an acrylonitrile monomer, an aromatic vinyl monomer, a fluorine-containing vinyl monomer and a silicon-containing vinyl monomer. "As the main component" as used herein means that the monomer constitutes 50 mol % or more, preferably 70 mol % or more of the total monomer units of the vinyl polymer.

In particular, an aromatic vinyl monomer and a (meth)acrylic monomer are preferred in view of for example the physical properties of the product to be obtained. An acrylic ester monomer and a methacrylic ester monomer are more preferred, an acrylic ester monomer is particularly preferred, and butyl acrylate is further preferred. In the present invention, these preferred monomers may be copolymerized or further block copolymerized with other monomers. It is preferred that these preferred monomers are contained in the amount of 40% by weight or more. From this point of view, vinyl polymer (I) is preferably a (meth) acrylic polymer, more preferably an acrylic polymer, further preferably an acrylic ester polymer. In the above expressions, (meth) acrylic acid for example indicates acrylic acid and/or methacrylic acid.

The molecular weight distribution of the vinyl polymer (I) of the present invention, i.e. the ratio of the weight average molecular weight (Mw) to the number average molecular weight (Mn) (Mw/Mn) measured using gel permeation chromatography (GPC), is not particularly limited. It is preferably less than 1.8, preferably 1.7 or less, more preferably 1.6 or less, further preferably 1.5 or less, particularly preferably 1.4 or less, and most preferably 1.3 or less. Measurement of GPC in the present invention typically uses chloroform as the mobile phase, measurement is carried out on a polystyrene gel column, and the number average molecular weight etc. can be calculated on the basis of a polystyrene standard sample.

The number average molecular weight of the vinyl polymer (I) of the present invention is not particularly limited. When measured by gel permeation chromatography, it is preferably 500 or more, more preferably 1, 000 or more, further preferably 3, 000 or more, and particularly preferably 5, 000 or more. It is also preferably 1, 000, 000 or less, more preferably 100, 000 or less. When the molecular weight is too low, intrinsic properties of the vinyl polymer are not expressed well. On the other hand, when it is too high, the vinyl polymer becomes difficult to handle.

### <Method for Synthesizing the Polymer>

The method for producing the vinyl polymer (I) of the present invention is not particularly limited. The vinyl polymer is generally produced by anionic polymerization or by radical polymerization. It is preferred to use radical polymerization because the monomers are of general-purpose use and can be easily controlled. It is preferred to produce the polymer by living radical polymerization, in particular radical polymerization using chain transfer agent as radical polymerization. The former method is particularly preferred.

The radical polymerization used to synthesize the vinyl polymer (I) of the present invention can be categorized into "general radical polymerization" in which a monomer having a particular functional group and a vinyl monomer are simply copolymerized using for example an azo compound or a peroxide as the polymerization initiator, and "control radical polymerization" in which a particular functional group can be introduced into a controlled site such as a terminus.

Although "general radical polymerization" is a simple method, when using this method, a monomer having a particular functional group is introduced into the polymer only at a certain probability. When a polymer with high functionalization rate is to be obtained, the monomer must be used at a considerably large amount. On the other hand, when only a small amount of the monomer is used, there exists a problem that the percentage of the polymer into which this particular functional group is not introduced increases. In addition, since this is a free radical polymerization, there also exists a problem that only a polymer having wide molecular weight distribution and high viscosity can be obtained.

"Control radical polymerization" can further be categorized into "chain transfer agent method" in which a vinyl polymer having a functional group at the terminus can be obtained by polymerization using a chain transfer agent having a particular functional group and "living radical polymerization" in which a polymer having the molecular weight almost as designed can be obtained by extension without for example termination reaction at the polymerization growth terminus.

A polymer with high functionalization rate can be obtained by "chain transfer agent method, " although a considerably large amount of a chain transfer agent having a particular functional group relative to the initiator is required, which leads to financial problems including disposal. In addition, as with the aforementioned "general radical polymerization," this is a free radical polymerization and therefore there also exists a problem that only a polymer having wide molecular weight distribution and high viscosity can be obtained.

Radical polymerizations are thought to be difficult to control due to high polymerization velocity and tendency of the reaction to terminate by for example coupling among radicals. Unlike these polymerizations, although "living radical polymerization" is a radical polymerization, termination reaction does not tend to occur, narrow molecular weight distribution (Mw/Mn of about 1.1 to 1.5) polymer can be obtained, and molecular weight can be freely controlled by controlling the charge ratio between the monomer and the initiator.

Accordingly, "living radical polymerization" allows for obtaining a polymer with narrow molecular weight distribution and low viscosity. In addition, since a monomer having a particular functional group can be introduced into virtually any site within the polymer, this production method is more preferred for producing a vinyl polymer having the above particular functional group.

Living polymerization in a narrow sense means a polymerization in which the termini remains constantly active and the molecular chain keeps growing, although generally, pseudo-living polymerization in which inactive and active termini are in an equilibrium state but still grow is also included. Its definition in the present invention is the latter.

In recent years, the "living radical polymerization" has actively been studied by various study groups. Examples of such studies include, for example, a method using cobalt-porphyrin complex as described in Journal of American Chemical Society (J. Am. Chem. Soc.), 1994, vol. 116, p. 7943; a method using a radical scavenger such as a nitroxide compound as described in Macromolecules, 1994, vol. 27, p. 7228; and "atom transfer radical polymerization" in which organic halide etc. is used as an initiator and a transition metal complex is used as a catalyst (Atom Transfer Radical Polymerization: ATRP) .

Among the "living radical polymerizations," "atom transfer radical polymerization," in which a vinyl monomer is polymerized using for example an organic halide or a halogenatedsulfonyl compound as the initiator and a transition metal complex as the catalyst, is further preferred as a method for producing a vinyl polymer having a particular functional group, due to the following reasons: the above characteristics of the "living radical polymerization" ; a halogen etc. which is relatively useful for conversion reaction of the functional group is present at the terminus; and there is a high degree of flexibility in designing of the initiator and catalyst. Examples of this atom transfer radical polymerization include Matyjaszewski et al., Journal of American Chemical Society (J. Am. Chem. Soc.), 1995, vol. 117, p. 5614; Macromolecules, 1995, vol. 28, p. 7901; Science, 1996, vol. 272, p. 866pp; WO96/30421, WO97/18247 or Sawamoto et al., Macromolecules, 1995, vol. 28, p. 1721.

It is not particularly limited which of these methods is used in the present invention. However, control radical polymerization is typically used, further living radical polymerization is preferred because it is easy to control, and atom transfer radical polymerization is particularly preferred.

Firstly, a control radical polymerization, i.e. polymerization using a chain transfer agent will be described. Radical polymerization using a chain transfer agent (telomer) is not particularly limited. The following two methods are examples of a method of obtaining a vinyl polymer having a termini structure suitable for the present invention.

Japanese Patent Laid-OpenNo. 4-132706 describes a method of obtaining a polymer having a halogen terminus by using a halogenated hydrocarbon as the chain transfer agent. Japanese Patent Laid-Open No. 61-271306, Japanese Patent No. 2594402, and Japanese Patent Laid-Open No. 54-47782 describes a method of obtaining a polymer having a hydroxyl group terminus by using for example hydroxyl group-containing mercaptan or hydroxyl group-containing polysulfide as the chain transfer agent.

Next, living radical polymerization will be described.

Among these, a method using a radical scavenger such as a nitroxide compound will be described first. This polymerization generally uses a stable nitroxy free radical (=N-O•) as a radical scavenger. Preferred compounds include, but are not limited to, a nitroxy free radical from a cyclic hydroxyamine such as 2,2,6,6-substituted-1-piperidinyloxy radical or 2,2,5,5-substituted-1-pyrrolidinyloxy radical. A suitable substituent includes an alkyl group having 4 or less atoms suchas methyl or ethyl groups. Aparticularnitroxy free radical compound includes, but is not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-t-butylamineoxy radical. A stable free radical such as galvinoxyl free radical may be used instead of the nitroxy free radical.

The above radical scavenger is used together with a radical generator. It is thought that the reaction product of the radical scavenger and the radical generator serves as the polymerization initiator to allow the polymerization of addition polymer monomers to progress. The ratio of the radical scavenger and generator is not particularly limited. One mol of the radical scavenger to 0.1 to 10 mols of the radical generator is suitable.

Various compounds can be used as a radical generator. A peroxide which can generate a radical under polymerization temperature condition is preferred. Examples of this peroxide include, but are not limited to, a dialkyl peroxide such as benzoyl peroxide and lauroyl peroxide; a diacyl peroxide such as dicumyl peroxide and di-t-butyl peroxide; a peroxy carbonates such as diisopropylperoxy dicarbonate and bis(4-t-butylcyclohexyl)peroxy dicarbonate; and an alkyl perester such as t-butylperoxy octoate and t-butylperoxy benzoate. Benzoyl peroxide is particularly preferred. In addition, a radical generator, for example a radical-generating azo compound such as azobisisobutylonitrile may be used instead of a peroxide.

As reported in Macromolecules, 1995, 28, 2993, an alkoxyamine compound of the following formula may be used as the initiator instead of using the radical scavenger and generator together.

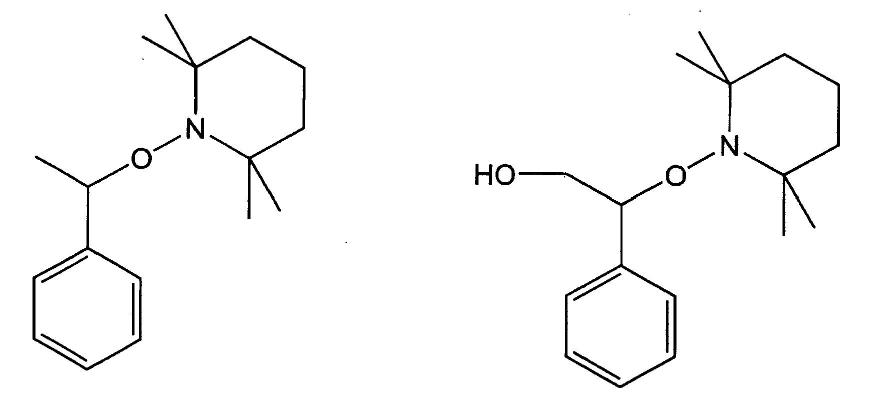

When using the alkoxyamine compound as an initiator, a polymer having a functional group at the terminus can be obtained by using a compound such as those shown in the above formula having a functional group such as a hydroxyl group. A polymer having a functional group at the terminus can be obtained by employing this step in the method of the present invention.

The monomer, the solvent, and the polymerization condition such as polymerization temperature employed in the polymerization using the above radical scavenger such as a nitroxide compound are not limited. Those used in atom transfer radical polymerization as describedbelowmaybe used.

Atom transfer radical polymerization, which is more preferred as the living radical polymerization of the present invention, will be described next.

In atom transfer radical polymerization, an organic halide, in particular an organic halide having a highly reactive carbon-halogen bond (for example, a carbonyl compound having a halogen at the α-position, or a compound having a halogen at the benzyl position), or a halogenated sulfonyl compound etc. are used as the initiator.

Specific examples of this compound include:

C₆H₅-CH₂X, C₆H₅-C(H) (X) CH₃, and C₆H₅-C (X) (CH₃) ₂

wherein C₆H₅ is a phenyl group; and X is chlorine, bromine, or iodine,
R³-C(H)(X)-CO₂R⁴, R³-C(CH₃)(X)-CO₂R⁴, R³-C(H)(X)-C(O)R⁴, and
R³-C(CH₃) (X) -C(O)R⁴,
wherein R³ and R⁴ are a hydrogen atom or an alkyl group having 1 to 20 carbon atoms, an aryl group having 6 to 20 carbon atoms, or an aralkyl group having 7 to 20 carbon atoms; and X is chlorine, bromine, or iodine, and
R³-C₆H₄-SO₂X
wherein R³ is a hydrogen atom or an alkyl group having 1 to 20 carbon atoms, an aryl group having 6 to 20 carbon atoms, or an aralkyl group having 7 to 20 carbon atoms ; and X is chlorine , bromine, or iodine.

An organic halide or a halogenated sulfonyl compound having a functional group other than those that initiate polymerization can be used as the initiator for atom transfer radical polymerization. In such a case, a vinyl polymer having a functional group at one of the main chain termini, and a structure represented by the following general formula (2) at the other main chain terminus is produced. Examples of this functional group include alkenyl, crosslinkable silyl, hydroxyl, epoxy, amino, and amide groups.

An organic halide having an alkenyl group is not limited. Examples are those having a structure represented by the general formula 6:

R⁶R⁷C(X)-R⁸-R⁹-C(R⁵)=CH₂ (6)

wherein R⁵ is a hydrogen atom or a methyl group; R⁵ and R⁷ are a hydrogen atom, or a monovalent alkyl group having 1 to 20 carbon atoms, an aryl group having 6 to 20 carbon atoms, or an aralkyl group having 7 to 20 carbon atoms, or are linked to one another at the other terminus; R⁸ is -C(O)O- (ester group), -C(O)- (keto group), or o-, m-, p-phenylene group; R⁹ is a direct bond, or a divalent organic group having 1 to 20 carbon atoms which may comprise one or more ether bonds; and X is chlorine, bromine, or iodine.

Examples of substituents R⁶ and R⁷ include a hydrogen atom, methyl group, ethyl group, n-propyl group, isopropyl group, butyl group, pentyl group, hexyl group, phenyl group, and benzyl group. R⁶ and R⁷ may be linked at the other terminus to form a cyclic skeleton.

Examples of a divalent organic group having 1 to 20 carbon atoms which may comprise one or more ether bonds of R⁹ include, for example, an alkylene group having 1 to 20 carbon atoms which may comprise one or more ether bonds.

Specific examples of an organic halide having an alkenyl group represented by the general formula 6 include:
XCH₂C (O) O (CH₂)ₙCH=CH₂,
H₃CC(H)(X)C(O)O(CH₂)ₙCH=CH₂,
(H₃C)₂C(X)C(O)O(CH₂)ₙCH=CH₂, and
CH₃CH₂C (H) (X) C (O) O (CH₂)ₙCH=CH₂, 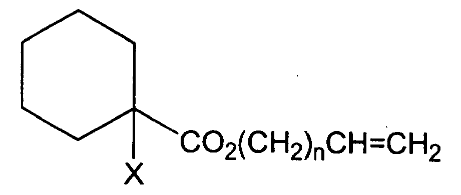 wherein X is chlorine, bromine, or iodine; and n is an integer from 0 to 20,
XCH₂C (O) O (CH₂) ₙO (CH₂) ₘCH=CH₂ ,
H₃CC (H) (X) C (O) O (CH₂) ₙO (CH₂) ₘCH=CH₂,
(H₃C) ₂C (X) C (O) O (CH₂) O (CH₂) _{M}CH=CH₂, and
CH₃CH₂C (H) (X) C (O) O (CH₂) ₙO (CH₂) ₘCH=CH₂, 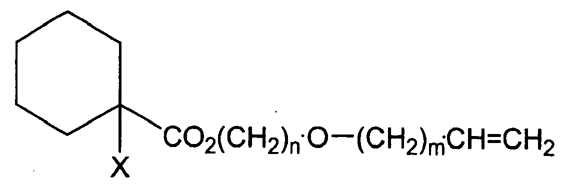 wherein X is chlorine, bromine, or iodine; n is an integer from 1 to 20; and m is an integer from 0 to 20,
o, m, p-XCH₂-C₆H₄- (CH₂)ₙ-CH=CH₂,
o, m, p-CH₃C (H) (X) -C₆H₄- (CH₂) ₙ-CH=CH₂, and
o, m, p-CH₃CH₂C (H) (X) -C₆H₄- (CH₂) ₙ-CH=CH₂,
wherein X is chlorine, bromine, or iodine; and n is an integer from 0 to 20,
o, m, p-XCH₂-C₆H₄-(CH₂)ₙ-O-(CH₂)ₘ-CH=CH₂,
o, m, p-CH₃C(H)(X)-C₆H₄-(CH₂)ₙ-O-(CH₂)ₘ-CH=CH₂, and
o, m, p-CH₃CH₂C(H)(X)-C₆H₄-(CH₂)ₙ-O-(CH₂)ₘCH=CH₂,
wherein X is chlorine, bromine, or iodine; n is an integer from 1 to 20; and m is an integer from 0 to 20,
o, m, p-XCH₂-C₆H₄-O- (CH₂) ₙ-CH=CH₂,
o, m, p-CH₃C(H)(X)- C₆H₄-O-(CH₂)ₙ-CH=CH₂, and
o, m, p-CH₃CH₂C (H) (X) -C₆H₄-O- (CH₂)ₙ-CH=CH₂,
wherein X is chlorine, bromine, or iodine; and n is an integer from 0 to 20, and
o, m, p-XCH₂-C₆H₄-O-(CH₂)ₙ-O-(CH₂)ₘ-CH=CH₂,
o, m, p-CH₃C(H)(X)-C₆H₄-O-(CH₂)ₙ-O-(CH₂)ₘ-CH=CH₂, and
o, m, p-CH₃CH₂C(H)(X)-C₆H₄-O-(CH₂)n-O-(CH₂)ₘ-CH=CH₂,
wherein X is chlorine, bromine, or iodine; n is an integer from 1 to 20; and m is an integer from 0 to 20.

Examples of an organic halide having an alkenyl group further include the compounds represented by the general formula 7:

H₂C=C (R⁵) -R⁹-C (R⁶) (X) -R¹⁰-R⁷ (7)

wherein R⁵, R⁶, R⁷, R⁹, and X are as described above; and R¹⁰ represents a direct bond, -C(O)O- (ester group), -C(O)- (keto group), or o-,m-,p-phenylene group)
R⁹ is a direct bond, or a divalent organic group having 1 to 20 carbon atoms (which may comprise one or more ether bonds) . When it is a direct bond, a vinyl group is connected to the carbon to which a halogen is connected, and this becomes a halogenated allyl compound. In this case, since the carbon-halogen bond is activated by the adjacent vinyl group, it is not necessary to have a C(O)O group or a phenylene group as R¹⁰, and this may be a direct bond. When R⁹ is not a direct bond, it is preferred to have a C(O)O, C(O), or phenylene group as R¹⁰ for activating the carbon-halogen bond.

Specific examples of a compound of the general formula 7 include:
CH₂=CHCH₂X, CH₂=C(CH₃)CH₂X,
CH₂=CHC (H) (X) CH₃, CH₂=C(CH₃)C(H) (X)CH₃,
CH₂=CHC (X) (CH₃)₂, CH₂=CHC(H) (X)C₂H₅,
CH₂=CHC (H) (X) CH(CH₃)₂,
CH₂=CHC (H) (X) C₆H₅, CH₂=CHC(H) (X) CH₂C₆H₅,
CH₂=CHCH₂C(H) (X) -CO₂R,
CH₂=CH(CH₂) ₂C (H) (X) -CO₂R,
CH₂=CH(CH₂) ₃C (H) (X) -CO₂R,
CH₂=CH(CH₂)₈C (H) (X) -CO₂R,
CH₂=CHCH₂C (H) (X)-C₆H₅,
CH₂=CH(CH₂) ₂C (H) (X)-C₆H₅, and
CH₂=CH(CH₂)₃C(H) (X)-C₆H₅,
wherein X is chlorine, bromine, or iodine; R is an alkyl group having 1 to 20 carbon atoms, an aryl group having 6 to 20 carbon atoms, or an aralkyl group having 7 to 20 carbon atoms).

Specific examples of a halogenated sulfonyl compound having an alkenyl group include:
o-, m-, p-CH₂=CH-(CH₂)ₙ-C₆H₄-SO₂X, and
o-, m-, p-CH₂=CH-(CH₂) ₙ-O-C₆H₄-SO₂X,
wherein X is chlorine, bromine, or iodine; and n is an integer from 0 to 20.

An organic halide having the above crosslinkable silyl group is not particularly limited. Examples are those having a structure represented by the general formula 8:

R⁶R⁷C(X)-R⁸-R⁹-C(H) (R⁵)CH₂-[Si(R¹¹)_{2-b} (Y) _{b}O]ₘ-Si(R¹²)₃₋ₐ(Y)ₐ (8)

wherein R⁵, R⁶, R⁷, R⁸, R⁹, and X are as described above; R¹¹ and R¹² are both an alkyl group having 1 to 20 carbon atoms, an aryl group having 6 to 20 carbon atoms, an aralkyl group having 7 to 20 carbon atoms, or a triorganosiloxy group represented by (R") ₃SiO- (R" is a monovalent hydrocarbon group having 1 to 20 carbon atoms, wherein the three R"s may be identical or different) ; when two or more of R¹¹ or R¹² exist, these may be identical or different; Y is a hydroxyl group or a hydrolyzable group, wherein when two or more of Y exist, these may be identical or different; a is 0, 1, 2, or 3; b is 0, 1, or 2 ; and m is an integer from 0 to 19 ; provided that a + mb ≥ 1.

Examples of a hydrolyzable group Y include, for example, a hydrogen atom, halogen atom, alkoxy, acyloxy, ketoximate, amino, amide, acid amide aminooxy, mercapto, and alkenyloxy groups.

Specific examples of a compound of the general formula 8 include:
XCH₂C (O) O (CH₂) ₙSi (OCH₃) ₃,
CH₃C (H) (X) C (O) O (CH₂) ₙSi (OCH₃) ₃,
(CH₃)₂C (X) C (O) O (CH₂)ₙSi (OCH₃) ₃,
XCH₂ C (O) O (CH₂)ₙSi (CH₃) (OCH₃)₂,
CH₃C(H) (X)C(O)O(CH₂)ₙSi(CH₃) (OCH₃)₂, and
(CH₃) ₂C (X) C (O) O (CH₂) ₙSi (CH₃) (OCH₃)₂,
wherein X is chlorine, bromine, iodine; and n is an integer from 0 to 20.
XCH₂C (O) O (CH₂) ₙO (CH₂) ₘSi (OCH₃) ₃,
H₃CC (H) (X) C (O) O (CH₂) ₙO (CH₂) ₘSi (OCH₃) ₃,
(H₃C) ₂C (X) C (O) O (CH₂)ₙO (CH₂) ₘSi (OCH₃)₃,
CH₃CH₂C (H) (X) C (O) O (CH₂) ₙO (CH₂) ₘSi (OCH₃)₃,
XCH₂C (O) O (CH₂) ₙO (CH₂) ₘSi (CH₃) (OCH₃) ₂,
H₃CC (H) (X) C (O) O (CH₂) ₙO (CH₂)ₘ-Si (CH₃) (OCH₃)₂,
(H₃C) ₂C (X) C (O) O (CH₂)ₙO (CH₂)ₘ-Si (CH₃) (OCH₃) ₂, and
CH₃CH₂C (H) (X) C (O) O (CH₂)ₙO (CH₂) ₘ-Si (CH₃) (OCH₃) ₂,
wherein X is chlorine, bromine, iodine; n is an integer from 1 to 20; and m is an integer from 0 to 20, and
o, m, p-XCH₂-C₆H₄-(CH₂)₂Si(OCH₃)₃,
o, m, p-CH₃C (H) (X)-C₆H₄- (CH₂) ₂Si (OCH₃) ₃
o, m, p-CH₃CH₂C (H) (X) -C₆H₄- (CH₂) ₂Si (OCH₃) ₃,
o, m, p-XCH₂-C₆H₄- (CH₂) ₃Si (OCH₃) ₃,
o, m, p-CH₃C (H) (X) - C₆H₄ - (CH₂) ₃ Si(OCH₃) ₃,
o, m, p-CH₃CH₂C (H) (X) -C₆H₄- (CH₂) ₃Si (OCH₃) ₃,
o, m, p-XCH₂-C₆H₄- (CH₂)₂-O- (CH₂) ₃Si (OCH₃) ₃,
o, m, p-CH₃C (H) (X) -C₆H₄- (CH₂) ₂ -O- (CH₂)₃ Si (OCH₃) ₃,
o, m, p-CH₃CH₂C (H) (X) -C₆H₄- (CH₂)₂-O- (CH₂) ₃Si (OCH₃) ₃,
o, m, p-XCH₂-C₆H₄-O-(CH₂)₃Si(OCH₃)₃,
o, m, p-CH₃C (H) (X) -C₆Hg-O- (CH₂) ₃Si (OCH₃) ₃,
o, m, p-CH₃CH₂C (H) (X) -C₆H₄-O- (CH₂)₃-Si (OCH₃) ₃,
o, m, p-XCH₂-C₆H₄ - O - (CH₂) ₂-O- (CH₂) ₃-Si (OCH₃) ₃,
o, m, p-CH₃C (H) (X) -C₆H₄-O- (CH₂)₂-O- (CH₂) ₃ S i (OCH₃) ₃, and
o, m, p-CH₃CH₂C (H) (X) -C₆H₄-O- (CH₂) ₂-O- (CH₂)₃Si (OCH₃) ₃,
wherein X is chlorine, bromine, or iodine.

Examples of an organic halide having the above crosslinkable silyl group further include those having the structure represented by the general formula 9:

(R¹²)₃₋ₐ(Y)ₐSi-[OSi(R¹¹) _{2-b}(Y)_{b}]ₘ-CH₂-C(H) (R⁵)-R⁹-C(R⁶) (X) -R¹⁰⁻R⁷ (9)

wherein R⁵, R⁶, R⁷, R⁹, R¹⁰, R¹¹, R¹², a, b, m, X, and Y are as described above.

Specific examples of this compound include:
(CH₃O) ₃SiCH₂CH₂C (H) (X) C₆H₅,
(CH₃O)₂(CH₃) SiCH₂CH₂C (H) (X) C₆H₅,
(CH₃O) ₃Si (CH₂) ₂C (H) (X) -CO₂R,
(CH₃O)₂(CH₃) Si (CH₂)₂C (H) (X) -CO₂R,
(CH₃O)₃Si (CH₂) ₃C (H) (X) -CO₂R,
(CH₃O)₂(CH₃) Si (CH₂) ₃C (H) (X) -CO₂R,
(CH₃O)₃Si (CH₂)₄C(H) (X)-CO₂R,
(CH₃O) ₂ (CH₃) Si (CH₂) ₄C (H) (X) -CO₂R,
(CH₃O)₃Si (CH₂) ₉C(H) (X) -CO₂R,
(CH₃O)₂(CH₃) Si (CH₂)₉C (H) (X) -CO₂R,
(CH₃O)₃Si(CH₂)₃C(H) (X)-C₆H₅,
(CH₃O)₂(CH₃) Si (CH₂)₃C (H) (X) -C₆H₅,
(CH₃O) ₃Si(CH₂)₄C (H) (X) -C₆H₅, and
(CH₃O)₂ (CH₃) Si (CH₂) ₄C(H) (X) -C₆H₅,
wherein X is chlorine, bromine, or iodine; R is an alkyl group having 1 to 20 carbon atoms, an aryl group having 6 to 20 carbon atoms, or an aralkyl group having 7 to 20 carbon atoms.

Examples of an organic halide or a halogenated sulfonyl compound having the above hydroxyl group are not particularly limited. Examples include:

HO-(CH₂)ₙ-OC(O)C(H) (R) (X)

wherein X is chlorine, bromine, or iodine; R is a hydrogen atom or an alkyl group having 1 to 20 carbon atoms, an aryl group having 6 to 20 carbon atoms, or an aralkyl group having 7 to 20 carbon atoms; and n is an integer from 1 to 20.

Examples of an organic halide or a halogenated sulfonyl compound having the above amino group are not particularly limited. Examples include:

H₂N-(CH₂)ₙ-OC(O)C(H) (R) (X)

wherein X is chlorine, bromine, or iodine; R is a hydrogen atom or an alkyl group having 1 to 20 carbon atoms, an aryl group having 6 to 20 carbon atoms, or an aralkyl group having 7 to 20 carbon atoms; and n is an integer from 1 to 20.

Examples of an organic halide or a halogenated sulfonyl compound having the above epoxy group are not particularly limited. Examples include: 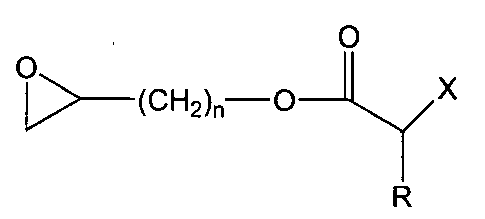 wherein X is chlorine, bromine, or iodine; R is a hydrogen atom or an alkyl group having 1 to 20 carbon atoms, an aryl group having 6 to 20 carbon atoms, or an aralkyl group having 7 to 20 carbon atoms; and n is an integer from 1 to 20.

In order to obtain the component (A) of the present invention, i.e. a polymer having one terminal structure represented by the above general formula (1) per molecule, it is preferred to use an organic halide or a halogenated sulfonyl compound having one initiation point as described above as the initiator. In addition, in order to obtain the component (A) of the present invention, i.e. a polymer having two or more terminal structures represented by the above general formula (1) per molecule, it is preferred to use an organic halide or a halogenated sulfonyl compound having two or more initiation points as the initiator. Specific examples include: 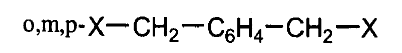 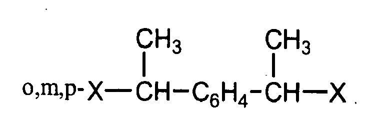 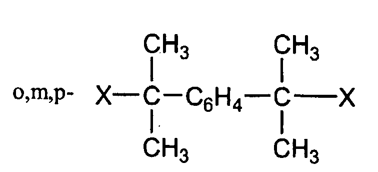 wherein C₆H₄ represents a phenylene group; and X represents chlorine, bromine, or iodine, 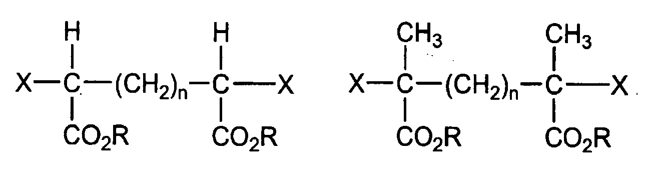 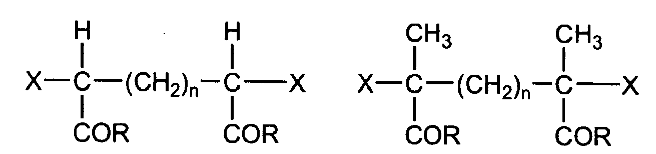 wherein R represents an alkyl group having 1 to 20 carbon atoms, an aryl group having 6 to 20 carbon atoms, or an aralkyl group having 7 to 20 carbon atoms; n represents an integer from 0 to 20; and X represents chlorine, bromine, or iodine, 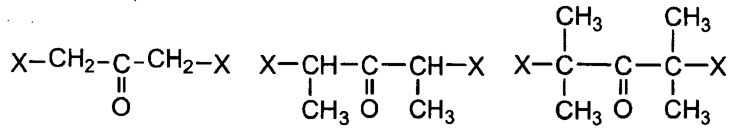 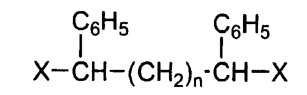 wherein X represents chlorine, bromine, or iodine; and n represents an integer from 0 to 20. 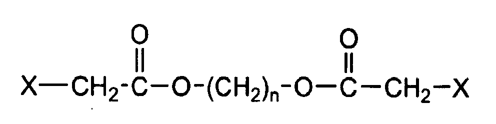 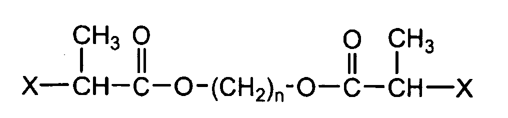 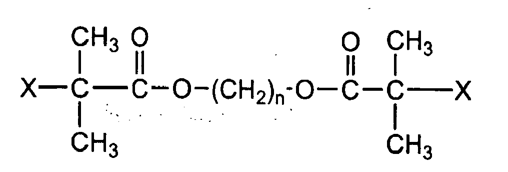 wherein n represents an integer from 1 to 20; and
X represents chlorine, bromine, or iodine, 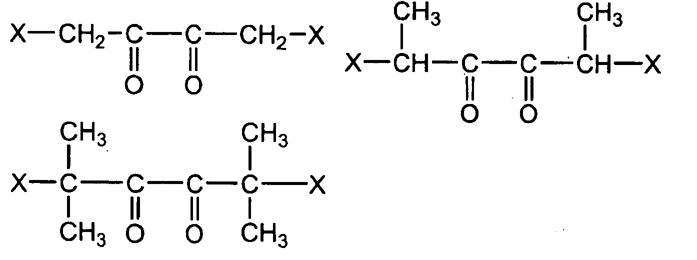 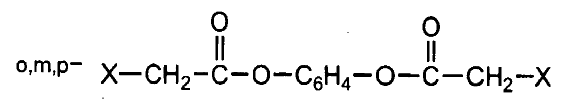 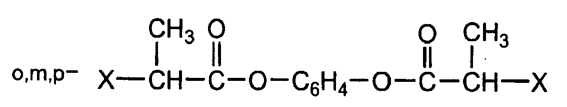 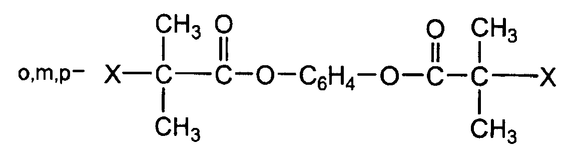 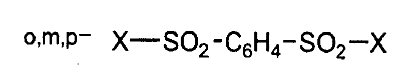 wherein X represents chlorine, bromine, or iodine.

The vinyl monomer used in this polymerization is not particularly limited, and any of those already exemplified can be suitably used.

The transition metal complex used as the polymerization catalyst is not particularly limited. A metal complex having an element from the 7th, 8th, 9th, 10th, or the 11th group of the periodic table as the central metal is preferred. A complex of zero-valent copper, monovalent copper, divalent ruthenium, divalent iron or divalent nickel are further preferred, and a copper complex is particularly preferred. Specific examples of a monovalent copper compound include, for example, cuprous chloride, cuprous bromide, cuprous iodide, cuprous cyanide, cuprous oxide, and cuprous perchlorate. When using a copper compound, a ligand including 2,2'-bipyridyl and a derivative thereof, 1,10-phenanthroline and a derivative thereof, and polyamine such as tetramethylethylenediamine, pentamethyldiethylenetriamine, or hexamethyltris(2-aminoethyl)amine can be added to enhance catalytic activity. Tris-triphenylphosphine complex of ruthenium dichloride (RuCl₂(PPh₃)₃) is also a suitable catalyst. When using a ruthenium compound as the catalyst, aluminum alkoxide is added as an activator. In addition, bistriphenylphosphine complex of divalent iron (FeCl₂ (PPh₃) ₂) , bistriphenylphosphine complex of divalent nickel (NiCl₂ (PPh₃)₂), and bistributylphosphine complex of divalent nickel (NiBr₂(PBu₃)₂) are also suitable as a catalyst.

Polymerization can be carried out in the absence of solvents or in a variety of solvents. A solvent which can be used include a hydrocarbon solvent such as benzene and toluene; an ether solvent such as diethyl ether and tetrahydrofuran; a halogenated hydrocarbon solvent such as methylene chloride and chloroform; a ketone solvent such as acetone, methyl ethyl ketone and methyl isobutyl ketone; an alcohol solvent such as methanol, ethanol, propanol, isopropanol, n-butyl alcohol, and tert-butyl alcohol; a nitrile solvent such as acetonitrile, propionitrile, and benzonitrile; an ester solvent such as ethyl acetate and butyl acetate; a carbonate solvent such as ethylene carbonate and propylene carbonate, which can be used alone or two or more can be mixed.

Further, polymerization can be carried out at a temperature in the range of from room temperature to 200°C, preferably from 50 to 150°C.

### <Functional Group>

The vinyl polymer of the present invention comprises at least one group represented by the general formula (1) at the molecular terminus.

CH₂=C(R^{a})-C(O)O- (1)

In the above formula, R^{a} represents a hydrogen atom or a monovalent organic group having 1 to 20 carbon atoms. The monovalent organic group having 1 to 20 carbon atoms is not particularly limited, and examples include a substituted or unsubstituted alkyl group having 1 to 20 (preferably 1 to 10) carbon atoms, a substituted or unsubstituted aryl group having 6 to 20 (preferably 6 to 10) carbon atoms, a substituted or unsubstituted aralkyl group having 7 to 20 (preferably 7 to 10) carbon atoms, and a nitrile group. Examples of a substituent include hydroxyl, halogen, carboxyl, ester, and ether groups. Preferred R^{a} is a hydrogen atom and a monovalent hydrocarbon group having 1 to 20 carbon atoms, more preferably hydrogen and methyl group.

The number of groups shown in the general formula (1) is sufficient when the vinyl polymer has at least one group per molecule on average. In view of the curing property of the composition, it is preferred that the vinyl polymer has more than one on average, more preferably 1.1 or more on average, further preferably 1. 5 ormore on average. It is also preferred that there are 5 or less groups at the most.

### <Introduction of Functional Group>

A method for producing polymer (I) is not particularly limited. This can be produced by for example producing a vinyl polymer having a reactive functional group by the aforementioned method, followed by converting the reactive functional group into a substituent having a (meth)acryloyl group.

A method for introducing a terminal functional group to the polymer of the present invention will be described below.

A method for introducing a (meth) acryloyl group at the terminus of a vinyl polymer is not limited. Examples include the following methods.
(Introduction Method 1) A method by reacting a vinyl polymer having a halogen group at the terminus with a compound shown in the general formula (3):

M⁺⁻OC(O)C(R^{a})=CH₂ (3)

wherein R^{a} represents a hydrogen atom or a monovalent organic group having 1 to 20 carbon atoms; and M⁺ represents an alkali metal ion or quaternary ammonium ion.

A preferred vinyl polymer having a halogen group at the terminus is one that has a terminal structure represented by the general formula (2):

-C(R¹) (R²) (X) (2)

wherein R¹ and R² represent a group connected to an ethylenically unsaturated group of the vinyl monomer; and X represents chlorine, bromine or iodine.
(Introduction Method 2) A method by reacting a vinyl polymer having a hydroxyl group at the terminus with a compound shown in the general formula (4):

X¹C(O)C(R^{a})=CH₂ (4)

wherein R^{a} represents a hydrogen atom or a monovalent organic group having 1 to 20 carbon atoms; and X¹ represents chlorine, bromine or a hydroxyl group.
(Introduction Method 3) A method by reacting a vinyl polymer having a hydroxyl group at the terminus with a diisocyanate compound, followed by reacting the remaining isocyanate group with a compound shown in the general formula (5):

HO-R'-OC(O)C(R^{a})=CH₂ (5)

wherein R^{a} represents a hydrogen atom or a monovalent organic group having 1 to 20 carbon atoms; and R' represents a divalent organic group having 2 to 20 carbon atoms.

Each of these methods will be described in detail below.

### <Introduction Method 1>

Introduction method 1 is a method by reacting a vinyl polymer having a halogen group at the terminus with a compound shown in the general formula (3):

M⁺⁻OC(O)C(R^{a})=CH₂ (3)

wherein R^{a} represents a hydrogen atom or a monovalent organic group having 1 to 20 carbon atoms; and M⁺ represents an alkali metal ion or quaternary ammonium ion.

A preferred vinyl polymer having a halogen group at the terminus is not particularly limited. Those having a terminal structure represented by the general formula (2) are preferred:

-C(R¹)(R²) (X) (2)

wherein R¹ and R² represent a group connected to an ethylenically unsaturated group of the vinyl monomer; and X represents chlorine, bromine or iodine.

A vinyl polymer having a terminal structure represented by the general formula (2) is produced either by the aforementioned method of polymerizing a vinyl monomer using an organic halide or a halogenated sulfonyl compound as the initiator and a transition metal complex as the catalyst, or by the method of polymerizing a vinyl monomer using a halogen compound as the chain transfer agent, preferably by the former.

A compound represented by the general formula (3) is not particularly limited, provided that R^{a} is the same as in the above general formula (1). Specific examples include, for example, -H, -CH₃, -CH₂CH₃, -(CH₂)ₙCH₃, wherein n represents an integer from 2 to 19, -C₆H₅, -CH₂OH, and -CN, preferably -H and -CH₃.

M⁺ is a counter cation to the oxyanion. Types of M⁺ include an alkali metal ion, in particular lithium, sodium, potassium, and quaternary ammonium ions. Quaternary ammonium ion includes tetramethyl ammonium, tetraethyl ammonium, tetrabenzyl ammonium, trimethyl dodecyl ammonium, tetrabutyl ammonium and dimethylpiperidinium ions, preferably sodium and potassium ions. The amount of the oxyanion of the general formula (3) used is preferably from 1 to 5 equivalents, further preferably 1.0 to 1.2 equivalents to the halogen terminus of the general formula (2) . A preferred solvent in which to carry out this reaction is a polar solvent since this is a nucleophilic substitution reaction, although it is not particularly limited. Examples of those used include tetrahydrofuran, dioxane, diethyl ether, acetone, dimethyl sulfoxide, dimethylformamide, dimethylacetamide, hexamethylphosphoric triamide, and acetonitrile. The reaction temperature is not limited, although it is generally from 0 to 150°C, more preferably from 10 to 100°C.

### <Introduction Method 2>

Introduction method 2 is a method by reacting a vinyl polymer having a hydroxyl group at the terminus with a compound shown in the general formula (4):

X¹C(O)C(R^{a})=CH₂ (4)

wherein R^{a} represents a hydrogen atom or a monovalent organic group having 1 to 20 carbon atoms; and X¹ represents chlorine, bromine or a hydroxyl group.

A compound represented by the general formula (4) is not particularly limited, provided that R^{a} is the same as in the above general formula (1). Specific examples include, for example, -H, -CH₃, -CH₂CH₃, -(CH₂)ₙCH₃, wherein n represents an integer from 2 to 19, -C₆H₅, -CH₂OH, and -CN, preferably -H and -CH₃.

A vinyl polymer having a hydroxyl group at the terminus is produced by the aforementioned method of polymerizing a vinyl monomer using an organic halide or a halogenated sulfonyl compound as the initiator and a transition metal complex as the catalyst, or by the method of polymerizing a vinyl monomer using a compound having a hydroxyl group as the chain transfer agent, preferably by the former. A method of producing a vinyl polymer having a hydroxyl group at the terminus by these methods is not limited. Examples include the following methods. (a) A method of synthesizing a vinyl polymer by living radical polymerization, in which a compound having both of polymerizable alkenyl and hydroxyl groups in one molecule such as those shown in the general formula 10 below is allowed to be reacted as a second monomer:

H₂C=C(R¹³)-R¹⁴-R¹⁵-OH (10)

wherein R¹³ represents a hydrogen atom or a monovalent organic group having 1 to 20 carbon atoms, preferably a hydrogen atom or methyl group; R¹⁴ represents -C(O)O- (ester group), or o-, m- or p-phenylene group; R¹⁵ represents a direct bond, or a divalent organic group having 1 to 20 carbon atoms which may comprise one or more ether bonds; when R¹⁴ is an ester group, the compound is a (meth)acrylate compound, and when R¹⁴ is a phenylene group, the compound is a styrene compound.

The timing for reacting a compound having both of polymerizable alkenyl and hydroxyl groups in one molecule is not limited. Especially when a rubber-like property is anticipated, it is preferred to allow the reaction of the compound as a second monomer to be carried out towards the end of the polymerization reaction or after the reaction of the first monomer.
(b) A method of synthesizing a vinyl polymer by living radical polymerization, in which towards the end of the polymerization reaction or after the reaction of the given monomer, a compound having a less polymerizable alkenyl group and a hydroxyl group in one molecule is allowed to be reacted as a second monomer.

These compounds are not particularly limited. Examples include a compound shown in the general formula 11:

H₂C=C(R¹³)-R¹⁶-OH (11)

wherein R¹³ is as described above; and R¹⁶ represents a divalent organic group having 1 to 20 carbon atoms which may comprise one or more ether bonds.

A compound as shown in the above general formula 11 is not particularly limited. An alkenyl alcohol such as 10-undecenol, 5-hexenol, and an allyl alcohol are preferred due to their availability.
(c) A method of introducing a hydroxyl group at the terminus, in which a halogen from a vinyl polymer having at least one carbon-halogen bond represented by the general formula 2 obtainable by atom transfer radical polymerization is hydrolyzed or reacted with a compound containing a hydroxyl group, using the method as disclosed in Japanese Patent Laid-Open No. 4-132706.
(d) A method of substituting a halogen by reacting a vinyl polymer having at least one carbon-halogen bond represented by the general formula 2 obtainable by atom transfer radical polymerization with a stabilized carbanion having a hydroxyl group represented by the general formula 12:

M⁺C⁻ (R¹⁷) (R¹⁸)-R¹⁶-OH (12)

wherein R¹⁶ and M⁺ are as described above; R¹⁷ and R¹⁸ are both electron withdrawing groups which stabilizes the carbanion C⁻, or one is the above electron withdrawing group and the other is a hydrogen atom, or an alkyl group having 1 to 10 carbon atoms or a phenyl group; examples of the electron withdrawing group of R¹⁷ and R¹⁸ include -CO₂R (ester group), -C(O)R (keto group), -CON (R₂) (amide group), -COSR (thio ester group), -CN (nitrile group), and -NO₂ (nitro group);
substituent R is an alkyl group having 1 to 20 carbon atoms, an aryl group having 6 to 20 carbon atoms or an aralkyl group having 7 to 20 carbon atoms, preferably an alkyl group having 1 to 10 carbon atoms or a phenyl group; particularly preferred R¹⁷ and R¹⁸ are -CO₂R, -C(O)R and -CN.
(e) A method of applying a elemental metal such as zinc or an organic metal compound to a vinyl polymer having at least one carbon-halogen bond represented by the general formula 2 obtainable by atom transferradical polymerization to prepare an enolate anion, followed by reaction with an aldehyde or ketone.
(f) A method of substituting a halogen with a substituent comprising a hydroxyl group, in which a halogen at the polymer terminus, preferably a vinyl polymer having at least one halogen represented by the general formula 2 is reacted with an oxyanion comprising a hydroxyl group such as those shown in the general formula 13 below or a carboxylate anion comprising a hydroxyl group such as those shown in the general formula 14 below:

HO-R¹⁶-O⁻M⁺ (13)

wherein R¹⁶ and M⁺ are as described above, and

HO-R¹⁶-C(O)O⁻M⁺ (14)

wherein R¹⁶ and M⁺ are as described above.

In the present invention, when a halogen is not directly involved in the method of introducing a hydroxyl group, for example as in methods (a) and (b), method (b) is further preferred because it can be controlled more easily.

In addition, when a hydroxyl group is introduced by converting a halogen from a vinyl polymer having at least one carbon-halogen bond, as in methods (c) to (f), method (f) is further preferred because it can be controlled more easily.

The amount of the compound represented by the general formula (4) used is preferably from 1 to 10 equivalents, more preferably from 1 to 5 equivalents, relative to the terminal hydroxyl group of the vinyl polymer. The reaction solvent is not particularly limited, although since this is a nucleophilic substitution reaction, a polar solvent, for example tetrahydrofuran, dioxane, diethyl ether, acetone, dimethyl sulfoxide, dimethylformamide, dimethylacetamide, hexamethyl phosphoric triamide, and acetonitrile are preferred. The reaction temperature is not particularly limited, although it is preferably from 0 to 150°C, more preferably from 10 to 100°C.

### <Introduction Method 3>

Introduction method 3 is a method by reacting a vinyl polymer having a hydroxyl group at the terminus with a diisocyanate compound, followed by reacting the remaining isocyanate group with a compound shown in the general formula (5) :

HO-R'-OC(O)C(R^{a})=CH₂ (5)

wherein R^{a} represents a hydrogen atom or a monovalent organic group having 1 to 20 carbon atoms; and R' represents a divalent organic group having 2 to 20 carbon atoms.

The compound represented by the general formula (5) is not particularly limited, provided that R^{a} is the same as in the above general formula (1). Specific examples include, for example, -H, -CH₃, -CH₂CH₃, -(CH₂)ₙCH₃, wherein n represents an integer from 2 to 19, -C₆H₅, -CH₂OH, and -CN, preferably -H and -CH₃.

Examples of a divalent organic group having 2 to 20 carbon atoms of R' include, for example, an alkylene group having 2 to 20 carbon atoms (such as ethylene, propylene, and butylene groups), an arylene group having 6 to 20 carbon atoms, and an aralkylene group having 7 to 20 carbon atoms.

A particular compound includes 2-hydroxypropyl methacrylate.

The vinyl polymer having a hydroxyl group at the terminus is as described above.

The diisocyanate compound is not particularly limited. Any of those well known in the art can be used, including, for example, tolylene diisocyanate, 4,4'-diphenylmethane diisocyanate, hexamethylene diisocyanate, xylene diisocyanate, metaxylene diisocyanate, 1,5-naphthalene diisocyanate, hydrogenated diphenylmethane diisocyanate, hydrogenated tolylene diisocyanate, hydrogenated xylene diisocyanate, and isophorone diisocyanate. These may be used alone, or two or more can be used in combination. A block isocyanate may also be used.

In order to obtain a more superior weather resistance, it is preferred to use a diisocyanate compound without any aromatic ring such as hexamethylene diisocyanate and hydrogenated diphenylmethane diisocyanate.

The amount of the diisocyanate compound used is preferably from 1 to 10 equivalents, more preferably from 1 to 5 equivalents, relative to the terminal hydroxyl group of the vinyl polymer . The reaction solvent is not particularly limited, although an aprotic solvent is preferred. The reaction temperature is not particularly limited, although it is preferably from 0 to 250°C, more preferably from 20 to 200°C.

The amount of the compound represented by the general formula (5) used is preferably from 1 to 10 equivalents, more preferably from 1 to 5 equivalents, relative to the remaining isocyanate group. The reaction solvent is not particularly limited, although an aprotic solvent is preferred. The reaction temperature is not particularly limited, although it is preferably from 0 to 250°C, more preferably from 20 to 200°C.

### <<(B) Polymerization Initiator>>

### <Curing Method>

The curable composition of the present invention is not particularly limited, although it is preferred to carry out the curing by an active energy beam such as UV and electron beam or by heat. Depending on each method of curing, a suitable compound is used as a polymerization initiator (B).

### <Curing by Active Energy Beam>

When curing is carried out by an active energy beam, it is preferred to include a photopolymerization initiator.

The photopolymerization initiator is not particularly limited, although radical or anion photopolymerization initiators are preferred, and a radical photopolymerization initiator is particularly preferred. Examples include acetophenone, 2,2-diethoxyacetophenone, propiophenone, benzophenone, xanthol, fluoreine, benzaldehyde, anthraquinone, triphenylamine, carbazole, 3-methylacetophenone, 4-methylacetophenone, 3-pentylacetophenone, 4-methoxyacetophene, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin methyl ether, benzoin butyl ether, bis(4-dimethylaminophenyl)ketone, benzyl methoxy ketal, and 2-chlorothioxanthone. These initiators may be used alone or in combination with another compound. In particular, the combination includes a combination with an amine such as diethanolmethylamine, dimethylethanolamine, and triethanolamine, further a combination in which an iodonium salt such as diphenyliodonium chloride is added to the above combination, a combination with a dye such as Methylene Blue and an amine.

A near-infrared light absorptive cation dye may be used as the near-infrared photopolymerization initiator. As a near-infrared light absorptive cation dye, those excited by photoenergy in the range of from 650 to 1500 nm, for example a near-infrared light absorptive cation dye-borate anion complex disclosed in for example Japanese Patent Laid-Open No. 3-111402, Japanese Patent Laid-Open No. 5-194619 are preferably used. It is further preferred to use the dye in combination with a boron sensitizer.

The amount of the photopolymerization initiator added is not particularly limited because it only needs to be enough to slightly photofunctionalize the system. It is preferred to add 0.001 to 100 parts by weight, more preferably 0.01 parts by weight or more, and further preferably 0.1 parts by weight or more to 100 parts by weight of the vinyl polymer (I). More preferably, it is 50 parts by weight or less, and further preferably 30 parts by weight or less.

The source of the active energy beam is not particularly limited. Depending on the properties of the photopolymerization initiator, the source includes irradiation of photo and electron beams by for example a high pressure mercury lamp, a low pressure mercury lamp, an electron beam irradiation equipment, a halogen lamp, a light emitting diode, and a semiconductor laser.

### <Curing by Heat>

When curing is carried out by heat, it is preferred to include a thermal polymerization initiator.

The thermal polymerization initiator is not particularly limited. These include an azo initiator, a peroxide, a persulfate, and a redox initiator.

Suitable azo initiators include, but are not limited to, 2,2'-azobis(4-methoxy-2,4-dimethylvaleronitrile) (VAZO 33), 2,2'-azobis(2-amidinopropane) dihydrochloride (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), 1,1-azobis(1-cyclohexanecarbonitrile) (VAZO 88) (all of which are available from DuPont Chemical), 2,2'-azobis(2-cyclopropylpropionitrile), and 2, 2' -azobis (methyl isobutyrate) (V-601) (available fromWAKO PURE CHEMICAL INDUSTRIES, LTD.).

Suitable peroxide initiators include, but are not limited to, benzoyl peroxide, acetyl peroxide, lauroyl peroxide, decanoyl peroxide, dicetyl peroxydicarbonate, t-butylperoxyisopropyl monocarbonate, di(4-t-butylcyclohexyl)peroxydicarbonate (Perkadox 16S) (available from Akzo Nobel), di(2-ethylhexyl)peroxydicarbonate, t-butyl peroxypivalate (Lupersol 11) (available from Elf Atochem), t-butyl peroxy-2-ethylhexanoate (Trigonox 21-C50) (available from Akzo Nobel), and dicumyl peroxide.

Suitable persulfate initiators include, but are not limited to, potassium persulfate, sodium persulfate, and ammonium persulfate.

Suitable redox (oxidation-reduction) initiators include, but are not limited to, a combination of the above persulfate initiator and a reducing agent such as sodium metahydrogensulfite and sodium hydrogensulfite; a system based on an organic peroxide and a tertiary amine, for example a system based on benzoyl peroxide and dimethylaniline; and a system based on an organic hydroperoxide and a transition metal, for example a system based on cumene hydroperoxide and cobalt naphthate.

Other initiators include, but are not limited to, pinacol such as tetraphenyl 1,1,2,2-ethanediol.

Preferred thermal polymerization initiators are those selected from the group consisting of an azo initiator and a peroxide initiator.

2,2'-azobis(methyl isobutyrate), t-butyl peroxypivalate, and di(4-t-butylcyclohexyl)peroxydicarbonate, and a mixture thereof are further preferred.

The thermal polymerization initiator used in the present invention is present in an amount effective as a catalyst. The preferred amount is, but is not limited to, typically from 0.01 to 50 parts by weight, more preferably 0.025 parts by weight or more, further preferably 0.05 parts by weight or more to 100 parts by weight of the vinyl polymer (I). More preferably, it is 20 parts by weight or less, and further preferably 10 parts by weight or less. When a mixture of initiators is used, the total amount of the initiator mixture is an amount used as though only one initiator was used.

The condition for curing by heat is not particularly limited. The temperature for curing will vary depending on for example the thermal polymerization initiator and polymer (I) used, and the compound added. The preferred temperature is in the range of from 50°C to 250°C, more preferably in the range of from 70°C to 200°C. The time for curing will vary depending on for example the polymerization initiator, the monomer, and the solvent used and the reaction temperature. The typical time for curing is in the range of from 1 minute to 24 hours.

### <<(C) Metallic Soap>>

A metallic soap component (C) of the present invention is not particularly limited, and any one can be used. A metallic soap is typically a compound where a long chain fatty acid and a metal ion is bound together, and those having a non-polar or low-polar moiety based on a fatty acid and a polar moiety based on the metal binding moiety within one molecule can be used. Examples of a long chain fatty acid include a saturated fatty acid having 1 to 18 carbon atoms (preferably 6 to 18 carbon atoms, more preferably 10 to 18 carbon atoms), an unsaturated fatty acid having 3 to 18 carbon atoms (preferably 6 to 18 carbon atoms, more preferably 10 to 18 carbon atoms), and an aliphatic dicarboxylic acid having 2 to 18 carbon atoms (preferably 6 to 18 carbon atoms, more preferably 10 to 18 carbon atoms). Among these, a saturated fatty acid having 1 to 18 carbon atoms is preferred in view of availability, and a saturated fatty acid having 6 to 18 carbon atoms is particularly preferred in view of the effect of mold release properties. Examples of a metal ion include an alkali metal and an alkali earth metal and further zinc, cobalt, aluminum, and strontium.

More specific examples of a metallic soap include, for example, lithium stearate, lithium 12-hydroxystearate, lithium laurate, lithium oleate, lithium 2-ethylhexanoate, sodium stearate, sodium 12-hydroxystearate, sodium laurate, sodium oleate, sodium 2-ethylhexanoate, potassium stearate, potassium 12-hydroxystearate, potassium laurate, potassium oleate, potassium 2-ethylhexanoate, magnesium stearate, magnesium 12-hydroxystearate, magnesium laurate, magnesium oleate, magnesium 2-ethylhexanoate, calcium stearate, calcium 12-hydroxystearate, calcium laurate, calcium oleate, calcium 2-ethylhexanoate, barium stearate, barium 12-hydroxystearate, barium laurate, zinc stearate, zinc 12-hydroxystearate, zinc laurate, zinc oleate, zinc 2-ethylhexanoate, lead stearate, lead 12-hydroxystearate, cobalt stearate, aluminum stearate, manganese oleate, and barium recinolate. Among these metallic soaps, a metal salt of stearic acid, in particular magnesium stearate, zinc stearate, calcium stearate, sodium stearate and potassium stearate are preferred due to their availability and safety. Particularly in view of economical efficiency, one or more selected from the group consisting of calcium stearate, magnesium stearate, and zinc stearate is further preferred. In addition, magnesium stearate and zinc stearate are particularly preferred in view of their high efficiency in mold release properties. These may be used alone, or can be used in combination of two or more.

The amount of the metallic soap added is not particularly limited, and the metallic soap is generally preferred to use in the range of from 0.025 to 5.0 parts by weight, more preferably 0.05 parts by weight or more, and further preferably 0 .1 parts by weight or more relative to 100 parts by weight of component (A). More preferably, it is 4.0 parts by weight or less, further preferably 3.0 parts byweight or less. When the amount incorporated is too high, the physical properties of the cured product decreases, and when the amount is too low, the intended mold release properties will not be obtained.

### <<(D) Reinforcing Silica>>

The composition of the present invention may further comprise a reinforcing silica (D).

Examples of a reinforcing silica component (D) include, for example fumed silica, precipitated silica, crystalline silica, fused silica, dolomite, silicic acid anhydride, and hydrous silicic acid. Those with a particle size of 50 µm or less and a specific surface area of 80 m²/g or more are particularly preferred in view of reinforcing effect. Among these, an ultrafine silica powder having a specific surface area (by BET adsorption) of 50 m²/g or more, typically from 50 to 400 m²/g, and preferably from about 100 to 300 m²/g is preferred. In addition, a surface-treated silica, for example those surface-treated with a silicon compound such as organosilane, organosilazane, and diorganocyclopolysiloxane are further preferred in that they tend to show fluidity suitable for molding. More specific examples of a reinforcing silica include, but are not particularly limited to, a fumed silica, e.g. AEROSIL from NIPPONAEROSILCO., LTD. andaprecipitatedsilica, e.g. NIPSIL from NIPPON SILICA INDUSTRIAL CO., LTD.

The amount of the reinforcing silica added is not particularly limited, but it is preferred to use from 0.1 to 100 parts by weight, preferably from 0.5 to 80 parts by weight, in particular from 1 to 50 parts by weight relative to 100 parts by weight of the vinyl polymer (I). When the amount incorporated is less than 0.1 parts by weight, the effect of improving reinforcement may not be sufficient, and when it is greater than 100 parts by weight, the workability of the curable composition may decrease. Further, the reinforcing silica of the present invention may be used alone or in combination of two or more.

### <<curable composition>>

Various additives may be incorporated into the curable composition of the present invention as necessary to regulate physical properties, for example, a fire retardant, an antioxidant, a filler, a plasticizer, a hardness regulator, an agent for regulating physical properties, an agent for imparting adhesion, a storage stability modifier, a solvent, a radical inhibitor, a metal deactivator, an antiozonant, a phosphorous peroxide-decomposing agent, a lubricant, a pigment, a foaming agent, and a light-curing resin. These various additives may be used alone or in combination of two or more.

In addition, since vinyl polymer is a polymer essentially superior in durability, anantioxidant is not always necessary. However, an antioxidant, an ultraviolet absorber, or a light stabilizer etc. well known in the art canbe used as appropriate.

### <Filler>

In addition to the reinforcing silica component (D), various fillers may be used as necessary in the curable composition of the present invention. Examples of a filler include, but are not limited to, a reinforcing filler such as wood f lour, pulp, cotton chip, asbestos, glass fiber, carbon fiber, mica, walnut coat powder, chaff powder, graphite, diatomaceous earth, clay, and carbon black; a filler such as heavy calcium carbonate, colloidal calcium carbonate, magnesium carbonate, diatomaceous earth, calcined clay, clay, talc, titanium oxide, bentonite, organic bentonite, ferric oxide, colcothar, fine aluminum powder, flint powder, zinc oxide, active zinc oxide, zinc powder, zinc carbonate and Shirasu balloon; a fiber filler such as asbestos, glass fiber and glass filament, carbon fiber, Kevler fiber, and polyethylene fiber.

Among these fillers, carbon black, calcium carbonate, titanium oxide, and talc for example are preferred.

In particular, when a cured product with high strength is to be obtained using these fillers, a filler selected mainly from for example carbon black, surface-treated fine calcium carbonate, crystalline silica, fused silica, calcined clay, clay and active zinc oxide can be added.

Moreover, when a cured product with low strength and high elongation is to be obtained, a filler selected mainly from for example titanium oxide, calcium carbonate, talc, ferric oxide, zinc oxide and Shirasuballoon can be added. Ingeneral, when the specific surface area of calcium carbonate is small, the effect of improving the breaking strength, breaking elongation, adhesion and weather-resistant adhesion of the cured product may not be sufficient. As the value of specific surface area increases, the effect of improving the breaking strength, breaking elongation, adhesion and weather-resistant adhesion of the curedproduct will increase.

In addition, it is preferred that calcium carbonate is surface-treated with a surface-treating agent. When a surface-treated calcium carbonate is used, it seems that the workability of the composition of the present invention is improved, and the effect of improving the adhesion and weather-resistant adhesion of the curable composition is greater as compared to using calcium carbonate without surface-treatment. Examples of the surface-treating agent used include an organic compound such as fatty acid, fatty acid soap, fatty acid ester or various surfactants, and various coupling agents such as silane coupling agent and titanate coupling agent. Specific examples include, but are not limited to, a fatty acid such as caproic acid, caprylic acid, pelargonic acid, capric acid, undecanoic acid, lauric acid, myristic acid, palmitic acid, stearic acid, behenic acid, and oleic acid; a salt of these fatty acids such as sodium and potassium salts; and an alkyl ester of these fatty acids. Specific examples of a surfactant include a sulfate ester anionic surfactant such as for example polyoxyethylene alkyl ether sulfate ester, long chain alcohol sulfate ester, and sodium and potassium salts thereof; and a sulfonate anionic surfactant such as for example alkylbenzene sulfonate, alkyl naphthalene sulfonate, paraffin sulfonate, α-olefin sulfonate, alkyl sulfosuccinate, and sodium and potassium salts thereof. The amount of the surface-treating agent used for treatment is preferably in the range of from 0.1 to 20% by weight, more preferably in the range of from 1 to 5% by weight of calcium carbonate. When the amount is less than 0.1% by weight, the effect of improving the workability, adhesion and weather-resistant adhesion may not be sufficient, and when the amount is greater than 20% by weight, the storage stability of the curable composition may decrease.

Although it is not particularly limited, when using calcium carbonate, if the effect of improving for example the thixotropy of the formulation or the breaking strength, breaking elongation, adhesion and weather-resistant adhesion of the cured product is particularly expected, it is preferred to use a colloidal calcium carbonate.

On the other hand, heavy calcium carbonate may be added with the intention of for example thinning or expanding the formulation and cost reduction. When heavy calcium carbonate is used, those shown below can be used as necessary.

Heavy calcium carbonate is a mechanically ground and processed natural chalk (white chalk), marble, limestone, etc. There are dry and wet methods for grinding. The product from a wet grinding method is often not preferred, because it often impairs the storage stability of the curable composition of the present invention. Heavy calcium carbonate is made into products of various average particle sizes through sorting. Although it is not particularly limited, if the effect of improving the breaking strength, breaking elongation, adhesion and weather-resistant adhesion of the cured product is expected, it is preferred to use those having a specific surface area of between 1.5 m²/g or more and 50 m²/g or less, further preferably 2 m²/g or more and 50 m²/g or less, more preferably 2.4 m²/g or more and 50 m²/g or less, and particularly preferably 3 m²/g or more and 50 m²/g or less. When the specific surface area is less than 1.5 m²/g, its effect of improving may not be sufficient. Needless to say, this is not always the case when the objective is merely to for example lower the viscosity or to expand the formulation.

The value of specific surface area is a value measured by the air permeability method according to JIS K 5101 (a method of calculating the specific surface area from permeability of air against packed powder layer). It is preferred to use the specific surface area measurement instrument SS-100 from Shimadzu Corporation as the measuring device.

These fillers may be used alone or two or more may be used, according to the objective or as necessary. Although it is not particularly limited, for example, if heavy calcium carbonate having a specific surface area of 1.5 m²/g or more and a colloidal calcium carbonate are used in combination as necessary, the rise in the viscosity of the formulation can be suppressed at a moderate level, and the effect of improving the breaking strength, breaking elongation, adhesion and weather-resistant adhesion of the cured product can be greatly anticipated.

When a filler is used, the amount of the filler added is preferably used in the range of from 5 to 1000 parts by weight, more preferably in the range of from 20 to 500 parts by weight, and particularly preferably in the range of from 40 to 300 parts by weight relative to 100 parts by weight of the vinyl polymer (I) . When the amount incorporated is less than 5 parts by weight, the effect of improving the breaking strength, breaking elongation, adhesion and weather-resistant adhesion of the cured product may not be sufficient, and when the amount is greater than 1000 parts by weight, the workability of the curable composition may decrease. The filler may be used alone or in combination of two or more.

### <Microballoon>

Inaddition, a microballoon may also be used incombination with these reinforcing fillers with the objective of providing lightening and cost reduction without great deterioration in physical properties.

Examples of such a microballoon (hereinafter referred to as balloon) include, but are not particularly limited to, a hollow body composed of a material of an inorganic or organic matter having a diameter of 1 mm or less, preferably 500 µm or less, further preferably 200 µm or less, as described in "Research and Development of Fillers" (CMC). In particular, it is preferred to use a micro-hollow body having an absolute specific gravity of 1.0 g/cm³ or less, and it is further preferred to use a micro-hollow body of 0.5 g/cm³ or less.

Examples of the inorganic balloon include silicate and non-silicate balloons. A silicate balloon includes for example Shirasu balloon, perlite, glass balloon, silica balloon, and fly ash balloon, and a non-silicate balloon includes for example alumina balloon, zirconia balloon, and carbon balloon. Specific examples of these inorganic balloons include WINLITE from THE IDICHI CHEMICAL COMPANY OF JAPAN and SANKILITE from SANKI ENGINEERING CO., LTD. as a Shirasu balloon; KAROON from NIPPON SHEET GLASS CO., LTD., CELSTAR Z-28 from SUMITOMO 3M LTD. , MICRO BALLOON from EMERSON & CUMING, CELAMIC GLASSMODULES from PITTSBURGE CORNING, and GLASS BUBBLES from 3M as a glass balloon; Q-CEL from ASAHI GLASS CO. , LTD. and E-SPHERES from TAIHEIYO CEMENT CORPORATION as a silica balloon; CEROSPHERES from PFAMARKETING and FILLITE from FILLITE U.S.A. as a fly ash balloon; BW from SHOWA DENKO K. K. as an alumina balloon; HOLLOW ZIRCONIUM SPHEES from ZIRCOA as a zirconia balloon; KUREKASPHERE from KUREHA CHEMICAL INDUSTRIES CO.,LTD.and CARBOSPHERE from GENERAL TECHNOLOGIES as a carbon balloon; all of which are commercially available.

Examples of the organic balloon can include a thermosetting resin balloon and a thermoplastic resin balloon. A thermosetting balloon includes phenol balloon, epoxyballoon, and urea balloon, and a thermoplastic balloon includes saran balloon, polystyrene balloon, polymethacrylate balloon, polyvinyl alcohol balloon, and styrene-acrylic balloon. Crosslinked thermoplastic resin balloon can also be used. A balloon herein may also be a foamed balloon, wherein a formulation comprising a foaming agent may be foamed to provide a balloon.

Specific examples of these organic balloons include UCAR and PHENOLIC MICROBALLOONS from UNION CARBIDE CORPORATION as a phenol balloon; ECCOSPHERES from EMERSON & CUMING as an epoxy balloon; ECCOSPHERES VF-O from EMERSON & CUMING as an urea balloon; SARAN MICROSPHERES from DOW CHEMICAL, EXPANCEL from NIPPON FILAMENT, and MATSUMOTO MICROSPHERE from MATSUMOTO YUSHI-SEIYAKU CO. , LTD. as a saran balloon; DYLITE EXPANDABLE POLYSTYRENE from ARCO POLYMERS and EXPANDABLE POLYSTYRENE BEADS from BASF WYANDOTE as a polystyrene balloon; SX863 (P) from JAPAN SYNTHETIC RUBBER CO., LTD. as a crosslinked styrene-acrylate balloon; all of which are commercially available.

The above balloons may be used alone, or two or more may be used in combination. In addition, these balloons that were surface-treated with for example a fatty acid, a fatty acid ester, a rosin, a rosin acid lignin, a silane coupling agent, a titanium coupling agent, an aluminum coupling agent, or a polypropylene glycol to improve the dispersibility and workability of the formulation can also be used. These balloons are used for lightening and cost reduction without losing the physical properties of the cured formulation such as flexibility, elongation and strength.

The amount of the balloon incorporated is not particularly limited. It can be used preferably in the range of from 0.1 to 50 parts by weight, further preferably from 0.1 to 30 parts by weight relative to 100 parts by weight of the vinyl polymer (I). When this amount is less than 0.1 parts by weight, the effect of lightening is small, and when the amount is 50 parts by weight or more, decrease in the mechanical property of the cured formulation such as tensile strength may be observed. In addition, when the specific gravity of the balloon is 0.1 or more, the amount is preferably from 3 to 50 parts by weight, further preferably from 5 to 30 parts by weight.

### <Plasticizer>

A plasticizer that canbe incorporated is not particularly limited. Examples include, depending on the objective such as regulation of a physical properties or adjustment of a characteristic a phthalate ester such as dibutyl phthalate, diheptyl phthalate, di(2-ethylhexyl)phthalate, and butyl benzyl phthalate; a non-aromatic dibasic acid ester such as dioctyl adipate, dioctyl sebacate, dibutyl sebacate, and isodecyl succinate; an aliphatic ester such as butyl oleate and methyl acetyl ricinolate; an ester of polyalkylene glycol such as diethylene glycol dibenzoate, triethylene glycol dibenzoate, and pentaerythritolester; a phosphoric ester such as tricresyl phosphate and tributyl phosphate; a trimellitic ester; a polystyrene such as polystyrene and poly-α-methylstyrene; polybutadiene, polybutene, polyisobutylene, butadiene-acrylonitrile, polychloroprene; a chlorinated paraffin; a hydrocarbon oil such as alkyl diphenyl and partially hydrogenated terphenyl; a process oil; a polyether, for example a polyether polyol such as polyethylene glycol, polypropylene glycol, and polytetramethylene glycol, and a derivative thereof wherein a hydroxyl group from these polyether polyols is converted into for example an ester or ether group; an epoxy plasticizer such as epoxidated soybean oil and benzyl epoxystearate; a polyester plasticizer obtained from a dibasic acid such as sebacic acid, adipic acid, azelaic acid, and phthalic acid, and a dihydric alcohol such as ethylene glycol, diethylene glycol, triethylene glycol, propylene glycol, and dipropylene glycol; a vinyl polymer obtained by polymerizing a vinyl monomer including an acrylic plasticizer using various methods.

By adding a polymeric plasticizer, which is a polymer having a number average molecular weight of from 500 to 15000, the viscosity of the curable composition and the mechanical property of the cured product obtained by curing the composition, such as tensile strength and elongation, can be regulated. In addition, as compared to using a low molecular weight plasticizer which is a plasticizer that do not contain anypolymer component within the molecule, the initial physical properties can be retained for a longer period of time, and drying properties (also called coating properties) upon coating of an alkyd paint to the cured product can be improved. Although it is not limited, this polymeric plasticizer may be with or without a functional group.

The number average molecular weight of the polymeric plasticizer is from 500 to 15000 as stated above, preferably from 800 to 10000, and more preferably from 1000 to 8000. When the molecular weight is too low, the plasticizer will run off over time by heat or rain. When this happens, the initial physical properties cannot be retained for a long period of time, and alkyd coating properties may not improve. When the molecular weight is too high, viscosity rises and workability is impaired.

Among these polymeric plasticizers, those compatible with a vinyl polymer are preferred. A vinyl polymer is preferred in view of compatibility, weather resistance, and heat resistance. Among vinyl polymers, a (meth)acrylic polymer is preferred and an acrylic polymer is further preferred. A method for synthesizing this acrylic polymer includes, for example, those obtained by conventional solution polymerization and solventless acrylic polymers. The latter acrylic plasticizer is more preferred for the objective of the present invention, because it does not use any solvents or chain transfer agents, but is produced by continuous high temperature polymerization (USP 4414370, Japanese Patent Laid-Open No.59-6207, Japanese Patent Publication No.5-58005, Japanese Patent Laid-Open No. 1-313522, USP 5010166). Examples of these include, but are not limited to, a series of UP products from TOAGOSEI CO., LTD. (see Industrial Materials (Kougyou zairyou), October, 1999). Needless to say, living radical polymerization can also be mentioned as another method for synthesis. This method is preferred because the molecular weight distribution of the polymer thereof is narrow and the viscosity is capable of being lowered. Moreover, although it is not limiting, atom transfer radical polymerization is more preferred.

The molecular weight distribution of the polymeric plasticizer is not particularly limited. However, it is preferred that the distribution is narrow, preferably less than 1.8, more preferably 1.7 or less, particularly preferably 1.6 or less, further preferably 1.5 or less, particularly preferably 1.4 or less, and most preferably 1.3 or less.

A plasticizer comprising the above polymeric plasticizer may be used alone or in combination of two or more, but it is not always necessary. Where necessary, a polymeric plasticizer may be used, and a low molecular weight plasticizer may also be used in combination so long as it is in the range that it does not have an adverse effect on the physical properties.

These plasticizers can also be incorporated at the time of polymer production.

The amount of the plasticizer used is not limited. It is from 5 to 150 parts by weight, preferably from 10 to 120 parts by weight, further preferably from 20 to 100 parts by weight relative to 100 parts by weight of the vinyl polymer (I). When the amount is less than 5 parts by weight, its effect as a plasticizer will not be expressed, and when the amount is greater than 150 parts by weight, the mechanical strength of the cured product will be insufficient.

### <Solvent>

Examples of a solvent that can be incorporated include an aromatic hydrocarbon solvent such as toluene and xylene; an ester solvent such as ethyl acetate, butyl acetate, amyl acetate, and cellosolve acetate; and a ketone solvent such as methyl ethyl ketone, methyl isobutyl ketone, and diisobutyl ketone. These solvents may be used at the time of polymer production.

### <Agent for Imparting Adhesion>

When the curable composition of the present invention is used alone as a molding rubber, it is not particularly necessary to add an agent for imparting adhesion. However, if for example a two-color molding with a heterogeneous base material is necessary, an agent for imparting adhesion can be added to the extent that it does not significantly affect the physical properties of the cured product obtained, and that it does not affect the mold release properties of the advantage of the present invention. The agent for imparting adhesionwhich canbe incorporated is not particularly limited, provided that it imparts adhesion to the curable composition. A crosslinkable silyl group-containing compound is preferred, and a silane coupling agent is further preferred. Specific examples include an alkylalkoxysilane such as methyltrimethoxysilane, dimethyldimethoxysilane, trimethylmethoxysilane, and n-propyltrimethoxysilane; an alkylisopropenoxysilane such as dimethyldiisopropenoxysilane and methyltriisopropenoxysilane; a vinyl unsaturated group-containing silane such as vinyltrimethoxysilane, vinyldimethylmethoxysilane, vinyltriethoxysilane, γ-methacryloyloxypropylmethyldimethoxysilane, and γ-acroyloxypropylmethyltriethoxysilane; a silicon varnish; and a polysiloxane.

Among these, a silane coupling agent comprising both an organic group having an atom other than carbon or hydrogen atoms within the molecule, such as an epoxy group, (meth)acrylic group, isocyanate group, isocyanurate group, carbamate group, amino group, mercapto group, and carboxyl group and a crosslinkable silyl group is preferred. Specific examples include, an isocyanate group-containing silane such as γ-isocyanatepropyltrimethoxysilane, γ-isocyanatepropyltriethoxysilane, γ-isocyanatepropylmethyldiethoxysilane, and γ-isocyanatepropylmethyldimethoxysilane as an isocyanate group-containing alkoxysilane; an isocyanurate silane such as tris(trimethoxysilyl)isocyanurate as an isocyanurate group-containing alkoxysilane; an amino group-containing silane such as γ-aminopropyltrimethoxysilane, γ-aminopropyltriethoxysilane, γ-aminopropylmethyldimethoxysilane, γ-aminopropylmethyldiethoxysilane, N-(β-aminoethyl)-γ-aminopropyltrimethoxysilane, N-(β-aminoethyl)-γ-aminopropylmethyldimethoxysilane, N-(β-aminoethyl)-γ-aminopropyltriethoxysilane, N-(β-aminoethyl)-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane as an amino group-containing alkoxysilane; a mercapto group-containing silane such as γ-mercaptopropyltrimethoxysilane, γ-mercaptopropyltriethoxysilane, γ-mercaptopropylmethyldimethoxysilane, and γ-mercaptopropylmethyldiethoxysilane as a mercapto group-containing alkoxysilane; a carboxysilane such as β-carboxyethyltriethoxysilane, β-carboxyethylphenylbis(2-methoxyethoxy) silane, and N-β-(carboxymethyl)aminoethyl-γ-aminopropyltrimethoxysila ne as a carboxyl group-containing alkoxysilane; a halogen-containing silane such as γ-chloropropyltrimethoxysilane as a halogen group-containing alkoxysilane.

In addition, a modified derivative thereof such as an amino-modified silyl polymer, a silylated amino polymer, an unsaturated amino silane complex, a phenylamino long chain alkyl silane, an aminosilylated silicon, and a silylated polyester can also be used as a silane coupling agent.

Among these, an alkoxysilane containing an epoxy group or a (meth) acrylic group within the molecule is more preferred in view of curing property and adhesion. More specific examples of these include γ-glycidoxypropylmethyldimethoxysilane, γ-glycidoxypropyltrimethoxysilane, γ-glycidoxypropyltriethoxysilane, β-(3,4-epoxycyclohexyl)ethyltrimethoxysilane, β-(3,4-epoxycyclohexyl)ethyltriethoxysilane, and γ-glycidoxypropylmethyldiisopropenoxysilane as an epoxy group-containing alkoxysilane; and γ-methacryloxypropyltrimethoxysilane, γ-methacryloxypropyltriethoxysilane, γ-acryloxypropyltrimethoxysilane, γ-acryloxypropyltriethoxysilane, methacryloxymethyltrimethoxysilane, methacryloxymethyltriethoxysilane, acryloxymethyltrimethoxysilane, and acryloxymethyltriethoxysilane as a (meth)acrylic group-containing alkoxysilane. These may be used alone or in combination of two or more.

A crosslinkable silyl group condensation catalyst can be used in combination with the above agent for imparting adhesion to further improve adhesion. Examples of a crosslinkable silyl group condensation catalyst include, for example, an organic tin compound such as dibutyltin dilaurate, dibutyltin diacetylacetonate, dibutyltin dimethoxide, and tin octylic acid; an organic aluminum compound such as aluminum acetylacetonate; an organic titanium compound such as tetraisopropoxy titanium and tetrabutoxy titanium.

Specific examples other than silane coupling agents include, but are not limited to, for example, an epoxy resin, a phenol resin, sulfur, an alkyl titanate, and an aromatic polyisocyanate.

The above agent for imparting adhesion is preferably incorporated in the amount of from 0.01 to 20 parts by weight relative to 100 parts by weight of the vinyl polymer (I). When the amount is less than 0.01 parts by weight, the effect of improving adhesion is small, and when the amount is greater than 20 parts by weight, physical properties of the cured product is adversely affected. The amount is preferably from 0.1 to 10 parts by weight, further preferably from 0.5 to 5 parts by weight.

The above agent for imparting adhesion may be used alone or two or more may be used in combination.

### <<Molding Property>>

The curable composition of the present invention is superior in storage stability even at a relatively high temperature, and enables the composition to be handled at a lower viscosity. It is also suitable for e.g. liquid injection molding at a high temperature.

According to the present invention, when the curable composition is allowed to flow, it is preferred to carry this out at a temperature of between 30°C or more and less than 80°C, more preferably allowed to flow at a temperature of between 40°C or more and less than 70°C.

Also according to the present invention, the curable composition can be allowed to flow at a temperature of between 30°C or more and less than 80°C, and at the same time carry out the curing reaction with flowing at 30°C or more. In other words, the curable composition of the present invention can also be used as a resin for injection molding (such as RIM and LIM) .

### <<Molding Method>>

A molding method for employing the curable composition of the present invention as the molded product is not particularly limited, and commonly used various molding methods can be used. Examples include, for example, cast molding, compression molding, transfer molding, injection molding, extrusion molding, rotational molding, hollow molding, and heat molding. Injection molding is preferred particularly in view that automation and serialization is possible and that it is superior in productivity.

### «Molded Product»

When the curable composition of the present invention is cured as a molded product, the molded product can be released from the mold without substantial fracture. A molded product without substantial fracture means that the molded product has a good enough surface to the extent that it can perform its purpose.

### «Application»

The curable composition of the present invention can be employed in various applications including, but not limited to, for example a material for electrical and electronic parts such as the back sealer of a solar battery, an electrical insulating material such as an insulating coating material for electric wire and cable, a coating material, a foam, an electrical and electronic potting material, a film, a gasket, a casting material, an artificial marble, various molding materials, and a rust proofing and waterproofing sealer for the edge (the cut edge) of a wire glass or shatterproof glass.

In addition, a molded product exhibiting rubber elasticity obtained from the curable composition of the present invention can be widely used, mainly on gaskets and packings. For example, in the automotive field, the composition can be used as a body part in a sealing material for maintaining airtightness, a glass vibration control material, and an auto body part vibration isolator, especially in a windseal gasket and a door glass gasket; as a chassis component in an engine and suspension rubber for vibration control and acoustic insulation, especially in an engine mount rubber; as an engine component, for example in a hose for cooling, fuel delivery, and exhaust gas control etc., a sealing material for engine oil, as well as in an exhaust gas cleaning device component and a brake component. In the consumer electronics field, the composition can be used as for example a packing, an O-ring, and a belt. Specific examples include an ornament for a lighting equipment; a waterproof packing; a vibration control rubber; an insect repellent packing; a vibration control and acoustic absorption material and air sealing material for a cleaner; a drip proof cover, a waterproof packing, a packing for heater component, a packing for electrode component, and a safety valve diaphragm for an electric water heater; a hose, a waterproof packing, and an electromagnetic valve for a sake warmer; a waterproof packing, a feed water tank packing, a water valve, a catch drain packing, a connection hose, a belt, a packing for insulated heater component, and a steam outlet sealing etc. for a steam oven/microwave and rice cooker; an oil packing, an 0-ring, a drain packing, a pressure pipe, a blowerpipe, anairintake/outtakepacking, avibrationcontrol rubber, an oil filler opening packing, an oil gauge packing, an oil feed pipe, a diaphragm valve, and an air pipe etc. for a burning appliance; a speaker gasket, a speaker edge, a turntable sheet, a belt, and a pulley for an audio equipment. In the architecture field, the composition can be used in for example a structural gasket (zipper gasket), an air membrane structure roofing material, a waterproof material, a shaped sealing, a vibration isolator, an acoustic insulation, a setting block, and a sliding material. In the sports field, the composition can be used in for example an all weather pavement material and a gymnasium flooring etc. as a sports flooring; in a soling material and an insole material etc. as sports shoes; in a golf ball etc. as a ball for ballgames. In the vibration control rubber field, the composition can be used in for example a vibration control rubber for an automobile, a vibration control rubber for a railcar, a vibration control rubber for an aircraft, and a fender beam material. In the marine and civil engineering field, the composition can be used in for example a rubber expansion joint, a bearing, a waterstop, a waterproof sheet, a rubber dam, an elastic pavement, a vibration control pad, and a protective barrier etc. as a structural material; a rubber mold form, a rubber packer, a rubber skirt, a sponge mat, a mortar hose, and a mortar screen etc. as a construction auxiliary material; a rubber sheet and an air hose etc. as a construction aid material; a rubber buoy and a wave absorbing material etc. as a safety precaution product; an oil fence, a silt fence, an antifouling material, a marine hose, a dredging hose, and a oil skimmer etc. as an environmental protection product. The composition can also be used in for example a rubber plate, a mat, and a foam plate.

### Examples

Specific Examples and Comparative Examples of the present invention will be described below. The present invention is not to be limited to the following Examples.

In the following Examples and Comparative Examples, "parts" and "%" represent "parts by weight" and "% by weight", respectively. "Triamine " in the Examples of the present invention refers to pentamethyldiethylenetriamine.

In the following Examples, "number average molecular weight" and "molecular weight distribution (the ratio of the weight average molecular weight to the number average molecular weight)" was calculated from standardized polystyrene-reduced value method using a gel permeation chromatography (GPC). The GPC column used was a column packed with polystyrene crosslinking gel (shodex GPC K-804 from SHOWA DENKO K. K.), and the GPC solvent used was chloroform.

The evaluation of mold release properties was carried out by assessing the release of the cured product from the mold using the following four levels.
E: the cured product is released from the mold without resistance
G: the cured product is release with some resistance
M: there is resistance and a part of the cured product remains on the mold
P: there is resistance and the cured product cannot be released from the mold

### (Production Example 1) (Synthesis of acryloyl diterminal-poly(n-butyl acrylate/ethyl acrylate/2-methoxyethyl acrylate))

Using cuprous bromide as the catalyst, pentamethyldiethylenetriamine as the ligand, diethyl-2,5-dibromoadipate as the initiator, n-butyl acrylate/ethyl acrylate/2-methoxyethyl acrylate at a molar ratio of 25/46/29 was polymerized. Poly(n-butyl acrylate/ethyl acrylate/2-methoxyethyl acrylate) with a terminal bromine group having a number average molecular weight of 16500 and a molecular weight distribution of 1.13 was obtained.

Four hundred grams of this polymer was dissolved in N,N-dimethylacetamide (400 mL), 10.7 g of potassium acrylate was added, and the mixture was stirred with heating at 70°C for 6 hours under nitrogen atmosphere to obtain a mixture of poly(n-butyl acrylate/ethyl acrylate/2-methoxyethyl acrylate) with an acroyl terminal group (hereinafter referred to as copolymer [P1]) . N,N-dimethylacetamide in the mixture was distilled off under reduced pressure, toluene was added to the residue, and the insoluble matter was removed by filtration. The toluene in the filtrate was distilled off under reduced pressure, and copolymer [P1] was purified. The purified polymer [P1] had a number average molecular weight of 16900, a molecular weight distribution of 1.14, and a number of average terminal acryloyl group of 1.8.

### (Production Example 2)

CuBr (1.11 kg) was placed into a 250 L reactor equipped with a stirrer and a jacket, and the reactor atmosphere was replaced with nitrogen gas. Acetonitrile (5.0kg) was added, warm water was passed through the jacket, and the mixture was stirred at 70°C for 15 minutes. To this solution, a mixture of butyl acrylate (6.6 kg), ethyl acrylate (9.5 kg), methoxyethylacrylate (7.8kg) and diethyl2,5-dibromoadipate (3.09 kg) and acetonitrile (5.0 kg) was added, and further stirred at 70°C for about 30 minutes. Triamine was added to initiate the reaction. Triamine was added as appropriate during the course of reaction, and polymerization was carried out with the temperature of the solution at from about 70 to 80°C. The total amount of triamine used in the polymerization step was 45 g. Four hours after the reaction was initiated, the unreacted monomer and acetonitrile were evaporated off by stirring with heat at 80°C under reduced pressure. Acetonitrile (29. 9 kg), 1,7-octadiene (28.4 kg), and triamine (446g) were added to the concentrate, and stirring was continued for 6 hours. Acetonitrile and the unreacted 1, 7-octadiene were evaporated off by stirring the mixture with heat at 80°C under reduced pressure and concentrated. Toluene (120 kg) was added to the concentrate, and the polymer was dissolved. The solid copper in the polymer mixture was filtered with a bag filter (available from HAYWARD, nominal pore size of filter fabric 1 µm). KYOWAAD 500SH (available from KYOWA CHEMICAL INDUSTRY CO., LTD.: 2 parts by weight relative to 100 parts by weight of the copolymer), KYOWAAD 700SL (available from KYOWA CHEMICAL INDUSTRY CO., LTD.: 2 parts byweight relative to 100 parts byweight of the copolymer) were added to the filtrate and stirred with heating at 120°C for 2 hours under oxygen-nitrogen gas mixed atmosphere (6% oxygen concentration) . The insoluble matter in the mixture was filtered off. The filtrate was concentrated to obtain the copolymer. The Br group was removed from the copolymer by heating the copolymer at 180°C for 12 hours (vacuum degree: 10 torr or less).

Toluene (100 parts by weight relative to 100 parts by weight of the copolymer), KYOWAAD 500SH (available from KYOWA CHEMICAL INDUSTRY CO., LTD.: 2 parts by weight relative to 100 parts byweight of the copolymer), KYOWAAD 700SL (available from KYOWA CHEMICAL INDUSTRY CO., LTD.: 2 parts by weight relative to 100 parts by weight of the polymer), hindered phenolic antioxidant (Irganox1010; CIBA SPECIALTY CHEMICALS, 0.05 parts) were added to the copolymer, and the mixture was stirred with heating at 130°C for 4 hours under oxygen-nitrogen gas mixed atmosphere (6% oxygen concentration). The insoluble matter in the mixture was filtered off. The filtrate was concentrated, a copolymer with an alkenyl group terminus (a copolymer of poly(butyl acrylate, ethyl acrylate, methoxyethyl acrylate) with terminal alkenyl) [P2] was obtained.

Copolymer [P2] had a number average molecular weight of 18000 and a molecular weight distribution of 1.1. The average number of alkenyl groups introduced into one molecule of the copolymer, as determined by ¹H NMR, was 1.9.

### (Example 1)

To 100 parts of copolymer [P1] obtained in Production Example 1, 20 parts of AEROSIL R974 (average size of primary particle 12 nm: available from NIPPON AEROSIL CO., LTD.) as the reinforcing silica, 0.5 parts of PERBUTYL I (t-butylperoxyisopropyl monocarbonate, available from NOF CORPORATION) as the polymerization initiator, 1 part of magnesium stearate (product name SM-1000, available from SAKAI CHEMICAL INDUSTRY CO. , LTD.) as the metallic soap were combined, and the mixture was blended well using three paint rollers. The curable composition obtained as such was fully degassed, followed by filling a stainless mold with the composition that was press vulcanized for 10 minutes at a temperature of 180°C, and immediately (while the cured product is hot) evaluated for its mold release properties from the mold. The result is shown in Table 1. Further, the compression set of the cured product obtained as such (150°C x 70 hours, measured as the distortion after a predetermined rate of compression, the rate that did not get restored after the removal of compression is shown as 100% in compression amount) was 42%, and almost no decrease in the physical properties was seen as compared to the 36% when magnesium stearate was not added.

### (Example 2)

Mold release properties was evaluated as in Example 1, except that 1 part of calcium stearate (product name SC-100, available from SAKAI CHEMICAL INDUSTRY CO., LTD.) was used as the metallic soap. The result is shown in Table 1. Further, the compression set of the curedproduct obtained as such (150°C x 70 hours, measured as the distortion after a predetermined rate of compression, the rate that did not get restored after the removal of compression is shown as 100% in compression amount) was 38%, and almost no decrease in the physical properties was seenas compared to the 36% when calcium stearate was not added.

### (Example 3)

Mold release properties was evaluated as in Example 1, except that 1 part of zinc stearate (product name SZ-100, available from SAKAI CHEMICAL INDUSTRY CO., LTD.) was used as the metallic soap. The result is shown in Table 1. Further, the compression set of the curedproduct obtained as such (150°C x 70 hours, measured as the distortion after a predetermined rate of compression, the rate that did not get restored after the removal of compression is shown as 100% in compression amount) was 41%, and almost no decrease in the physical properties was seen as compared to the 36% when zinc stearate was not added.

### (Example 4)

Mold release properties was evaluated as in Example 1, except that the mold release properties from the mold was evaluated when the cured product was cooled down to room temperature after press vulcanization. The result is shown in Table 1.

### (Example 5)

Mold release properties was evaluated as in Example 1, except that 1 part of sodium stearate was used as the metallic soap. The result is shown in Table 1. Further, the compression set of the cured product obtained as such (150°C x 70 hours, measured as the distortion after a predetermined rate of compression, the rate that did not get restored after the removal of compression is shown as 100% in compression amount) was 38%, and almost no decrease in the physical properties was seen as compared to the 36% when sodium stearate was not added.

### (Example 6)

Mold release properties was evaluated as in Example 1, except that 1 part of potassium stearate was used as the metallic soap. The result is shown in Table 1. Further, the compression set of the cured product obtained as such (150°C x 70 hours, measured as the distortion after a predetermined rate of compression, the rate that did not get restored after the removal of compression is shown as 100% in compression amount) was 35%, and almost no decrease in the physical properties was seen as compared to the 36% when potassium stearate was not added.

### (Comparative Example 1)

Mold release properties was evaluated as in Example 1, except that no metallic soap was added. The result is shown in Table 1.

### (Comparative Example 2)

Mold release properties was evaluated as in Example 1, except that no metallic soap was added, and the mold release properties from the mold was evaluated when the cured product was cooled down to room temperature after press vulcanization. The result is shown in Table 1.

**Table 1**

| | Example | | | | | | Comparative Example | |
|---|---|---|---|---|---|---|---|---|
| | 1 | 2 | 3 | 4 | 5 | 6 | 1 | 2 |
| Mold release properties | E | G | E | E | G | G | P | P |

| | | | | | | | | |
|---|---|---|---|---|---|---|---|---|
| E:Excellent, G:Good, P:Poor | | | | | | | | |

From Comparative Examples 1 and 2 in Table 1, it is apparent that the mold release properties is insufficient without addition of a metallic soap. From Examples 1 through 6, it is apparent that the curable composition of the present invention is superior in mold release properties.

## Claims

1. A curable composition comprising:
(A) a vinyl polymer (I) comprising, at the molecular terminus, at least one group represented by the general formula (1):
CH₂=C(R^{a})-C(O)O- (1)
wherein R^{a} represents a hydrogen atom or a monovalent organic group having 1 to 20 carbon atoms
(B) a polymerization initiator, and
(C) a metallic soap.

2. The curable composition according to claim 1, wherein the vinyl polymer (I) has a molecular weight distribution of less than 1.8.

3. The curable composition according to claim 1 or 2, wherein the vinyl polymer (I) has a main chain produced by polymerization using as the main component at least one monomer selected from the group consisting of a (meth)acrylic monomer, an acrylonitrile monomer, an aromatic vinyl monomer, a fluorine-containing vinyl monomer and a silicon-containing vinyl monomer.

4. The curable composition according to any one of claims 1 to 3, wherein the vinyl polymer (I) is a (meth) acrylic polymer.

5. The curable composition according to any one of claims 1 to 4, wherein the vinyl polymer (I) is an acrylic polymer.

6. The curable composition according to any one of claims 1 to 5, wherein the vinyl polymer (I) is an acrylic esterpolymer.

7. The curable composition according to any one of claims 1 to 6, wherein the vinyl polymer (I) has a main chain produced by living radical polymerization.

8. The curable composition according to claim 7, wherein the living radical polymerization is atom transfer radical polymerization.

9. The curable composition according to claim 8, wherein the atom transfer radical polymerization uses as the catalyst a transition metal complex having an element from the 7th, 8th, 9th, 10th, or the 11th group of the periodic table as the central metal.

10. The curable composition according to claim 9, wherein the metal complex used as the catalyst is a complex of a metal selected from the group consisting of copper, nickel, ruthenium and iron.

11. The curable composition according to claim 10, wherein the metal complex used as the catalyst is a copper complex.

12. The curable composition according to any one of claims 1 to 11, wherein the component (A) is a vinyl polymer obtained by the following steps of:
(1) polymerizing a vinyl monomer by atom transfer radical polymerization to produce a vinyl polymer having a terminal structure represented by the general formula (2):
-C(R¹) (R²) (X) (2)
wherein R¹ and R² represent a group connected to an ethylenically unsaturated group of the vinyl monomer; and X represents chlorine, bromine or iodine,
and
(2) converting a terminal halogen of the polymer into a group represented by the general formula (1).

13. The curable composition according to any one of claims 1 to 12, wherein the component (A) is produced by the following step of:
reacting a vinyl polymer having a halogen group at the terminus with a compound represented by the general formula (3):
M⁺⁻OC(O)C(R^{a})=CH₂ (3)
wherein R^{a} represents a hydrogen atom or a monovalent organic group having 1 to 20 carbon atoms; and M⁺ represents an alkali metal ion or quaternary ammonium ion.

14. The curable composition according to claim 13, wherein the vinyl polymer having a halogen group at the terminus has a terminal structure represented by the general formula (2) :
-C(R¹) (R²) (X) (2)
wherein R¹ and R² represent a group connected to an ethylenically unsaturated group of the vinyl monomer; and X represents chlorine, bromine or iodine.

15. The curable composition according to any one of claims 1 to 12, wherein the component (A) is produced by the following step of:
reacting a vinyl polymer having a hydroxyl group at the terminus with a compound represented by the general formula (4):
X¹C(O)C(R^{a})=CH₂ (4)
wherein R^{a} represents a hydrogen atom or a monovalent organic group having 1 to 20 carbon atoms; and X¹ represents chlorine, bromine or a hydroxyl group.

16. The curable composition according to any one of claims 1 to 12, wherein the component (A) is produced by the following steps of:
(1) reacting a vinyl polymer having a hydroxyl group at the terminus with a diisocyanate compound, and
(2) reacting the remaining isocyanate group with a compound represented by the general formula (5):
HO-R'-OC(O)C(R^{a})=CH₂ (5)
wherein R^{a} represents a hydrogen atom or a monovalent organic group having 1 to 20 carbon atoms; and R' represents a divalent organic group having 2 to 20 carbon atoms.

17. The curable composition according to any one of claims 1 to 6, wherein the vinyl polymer (I) has a main chain produced by polymerizing a vinyl monomer using a chain transfer agent.

18. The curable composition according to any one of claims 1 to 17, wherein the vinyl polymer (I) has a number average molecular weight of 3000 or more.

19. The curable composition according to any one of claims 1 to 18, wherein the component (B) is a photopolymerization initiator.

20. The curable composition according to claim 19, wherein the photopolymerization initiator is a radical photopolymerization initiator.

21. The curable composition according to any one of claims 1 to 18, wherein the component (B) is a thermal polymerization initiator.

22. The curable composition according to claim 21, wherein the thermal polymerization initiator is selected from the group consisting of an azo initiator, a peroxide, a persulfate, and a redox initiator.

23. The curable composition according to any one of claims 1 to 22, wherein the component (C) is a metal salt of stearic acid.

24. The curable composition according to claim 23, wherein the component (C) is one or more selected from the group consisting of magnesium stearate, zinc stearate, calcium stearate, sodium stearate and potassium stearate.

25. The curable composition according to claim 23, wherein the component (C) is magnesium stearate and/or zinc stearate.

26. The curable composition according to any one of claims 1 to 25, further comprising reinforcing silica (D).

27. The curable composition according to any one of claims 1 to 26, comprising from 0.025 to 5 parts by weight of the component (C) relative to 100 parts by weight of the component (A).

28. A method for improving the mold release properties of a cured product obtained from curable composition comprising (A) a vinyl polymer having, at the molecular terminus, at least one group represented by the general formula (1):
CH₂=C(R^{a})-C(O)O- (1)
wherein R^{a} represents a hydrogen atom or a monovalent organic group having 1 to 20 carbon atoms), and (B) a polymerization initiator, the method comprising incorporating (C) a metallic soap into the curable composition.

29. A cured product obtained from the curable composition according to any one of claims 1 to 27.

30. The cured product according to claim 29, wherein the cured product is a molded product, and wherein the molded product is substantially not broken upon removal of the molded product from a mold after manufacture.
